# DEMANDE DE BREVET EUROPEEN

(11) **EP 2 813 586 A1**
(43) Date de publication de la demande: **17.12.2014**
(21) Numéro de dépôt: 13171271.3
(22) Date de dépôt: 10.06.2013
(51) Int. Cl.: C22B 3/18

(54) **Procede de biolixiviation d'un metal present dans un materiau**

(71) Demandeur: Meurice Recherche et Développement, 1070 Bruxelles (BE)
(72) Inventeur: Nicolay, Xavier, 1070 Bruxelles (BE); Vauchel, Karine, 1070 Bruxelles (BE)
(74) Mandataire: Pecher, Nicolas

(57) **Abrégé**

Un procédé de récupération d'au moins un métal présent au sein d'un matériau, ledit matériau pouvant comprendre du fer, le procédé comprenant une étape de fourniture d'un ion ferreux, une étape de fourniture d'un ion ferrique et une étape de biolixiviation d'au moins un métal présent dans le matériau par les ions ferriques, chacune des étapes étant mise en oeuvre par une population bactérienne particulière.

## Description

### Domaine de l'invention

L'invention se rapporte au domaine de la bio-hydrométallurgie visant à la récupération de métaux d'intérêt ferreux et non-ferreux présents dans un matériau par un procédé de biolixiviation. Plus particulièrement, l'invention se rapporte à un procédé de biolixiviation indirecte pour extraire au moins un métal présent dans un matériau, et comprenant les étapes de fourniture d'un ion ferreux dans un premier espace de réaction, d'oxydation de l'ion ferreux fourni en ion ferrique dans un second espace de réaction et de biolixiviation dudit au moins un métal par ledit ion ferrique dans un troisième espace de réaction.

### État de la technique

Les processus de biolixiviation consistent à solubiliser des métaux présents à l'état réduit ou élémentaire à partir de différents matériaux, tels que des minerais ou de sous-produits/déchets solides issus de l'industrie métallurgique, de l'industrie mécanique, de l'industrie de transformation ou du traitement et du recyclage de déchets tels que des cendres d'incinérateurs, des batteries et des catalyseurs usagés, par l'utilisation de micro-organismes. Les métaux ainsi solubilisés sont ultérieurement concentrés par des techniques physico-chimiques, hydro métallurgiques ou électrochimiques. Un processus de biolixiviation indirecte comprend une étape de génération d'une solution comprenant des ions ferreux, les ions ferreux étant ensuite oxydés en ions ferriques par les micro-organismes. Ces ions ferriques vont lixivier les métaux, c'est-à-dire oxyder spontanément les métaux présents dans le matériau et conduire à leur solubilisation lorsque les conditions d'oxydo-réduction et thermodynamiques sont favorables à la réaction entre le Fer(III) et le métal réduit ou élémentaire considéré. Cette solubilisation par changement d'état d'oxydation est appelée redoxolyse et peut être exprimée par l'équation :

Me°+ Fe2(SO₄)3 → MeSO4 + 2 FeSO₄

Me° représentant un métal d'intérêt sous une forme élémentaire, et MeSO₄ représentant le même métal d'intérêt soluble à l'état oxydé sous une forme de sulfate.

Dans son acception large, le procédé de biolixiviation comprend également deux mécanismes complémentaires qui mènent à la solubilisation des métaux contenus dans les matériaux : l'acidolyse et la complexolyse. Par acidolyse, le métal réduit est solubilisé par protonation de l'anion formant le composé initial avec le métal réduit (oxydes métalliques par exemple). Cette réaction peut s'exprimer selon l'équation suivante : MeO + H₂SO₄ → MeSO₄ + H₂O; l'équation peut être adaptée *mutatis mutandis* en fonction des différentes formes existantes réduites du métal dans le matériau. Les protons peuvent être d'origine chimique ou générés biologiquement à partir de soufre élémentaire par oxydation en acide sulfurique. Par complexolyse, les métaux sont solubilisés par la formation d'un complexe soluble avec des agents complexants, chélatants ou des acides organiques qui sont générés par certaines espèces de microorganismes.

Les processus de biolixiviation indirects reposent sur la mise en oeuvre de populations de micro-organismes ayant la capacité à utiliser un ion ferreux comme source d'électron, oxydant en conséquence l'ion ferreux en ion ferrique. L'application de ce processus à des déchets industriels permet la récupération après solubilisation de métaux d'intérêt, soit dans le cadre de dépollution de déchets, soit dans un processus de récupération de métaux d'intérêt pour leur réemploi dans de nouveaux matériaux. De tels processus sont connus. Par exemple, dans la publication de Bosecker (FEMS Microbiology Reviews, 20(1997) 591-604) et plus récemment dans celle de Lee (Waste Management, 32(2012) 3-18), plusieurs procédés de biolixiviation de déchets industriels sont décrits. Le contrôle et la régulation du pH peuvent se faire soit par la présence de bactéries oxydant spécifiquement le soufre en acide sulfurique, soit par l'ajout d'acide sulfurique directement dans le milieu de biolixiviation. La mise en oeuvre industrielle de la technique de biolixiviation se fait généralement par aspersion et recirculation de la solution lixiviante sur des tas ou des andains de minerais. Dans le cas de déchets sous forme de granulats ou de poudres, les bioréacteurs usuels consistent en des colonnes bi- ou triphasiques, soit des structures dans lesquelles les déchets entassés ou en suspension sont soumis à la recirculation de la solution lixiviante qui percole sur la matière solide ou qui l'immerge (couramment défini par le terme « packed bed bioreactor »). Une phase gazeuse pourvoit aux besoins en oxygène et en dioxyde de carbone (Pant et al., Chemical and biological extraction of metals present in E-waste : a hybrid technology. Waste Management 32 (2012); 979-990 ; Ilyas et al. Column bioleaching of metals from electronic scrap. Hydrometallurgy 101 (2010) 135-140). A plus grande échelle, des réacteurs de type « réacteur agité » (« stirred tank bioreactor bioleaching ») ou à entrainement gazeux (« air lift reactor ») sont utilisés pour assurer les meilleures conditions opératoires.

Il existe des procédés en plusieurs étapes dans lesquels les procédés chimiques d'oxydation des métaux sont séparés physiquement des procédés biologiques de génération de l'agent lixiviant (i.e. l'ion ferrique). On peut par exemple citer Lewis (Minerals Engineering, Volume 24, Issue 11, September 2011, Pages 1166-1171*).* Cependant, les procédés ainsi décrits ne permettent pas d'obtenir un haut degré de récupération des métaux d'intérêt, ou les procédés sont relativement lents (de deux à cent jours), diminuant ainsi la rentabilité de ces procédés. Ainsi, ces procédés ne sont pas satisfaisants d'un point de vue du rendement et de la cinétique pour récupérer une partie non négligeable des métaux d'intérêt afin de rendre le procédé rentable d'un point de vue technico-économique.

De surcroit, certains matériaux traités par biolixiviation peuvent comprendre, selon leur nature, différents composés qui peuvent s'avérer toxiques et réduire la viabilité microbienne et/ou inhiber la croissance et/ou l'activité des micro-organismes. De tels composés sont par exemple des métaux lourds, l'Arsenic (III) et l'Arsenic (V), le Cobalt ou des molécules organiques. Ces composés réduisent l'efficacité ou empêchent le traitement par voie biologique des matériaux les comprenant.

Actuellement, les procédés hydrométallurgiques, électrochimiques (comme l'électroraffinage) et pyrométallurgiques ne permettent pas de récupérer des métaux avec un rendement suffisamment élevé lorsque le matériau comprend une quantité faible de métaux d'intérêt et/ou s'il comprend des métaux qui ne peuvent pas être séparés par les techniques les plus simples comme : l'Arsenic, l'Antimoine, le Mercure et le Bismuth, le Magnésium, le Thallium. Ces éléments nécessitent des prétraitements ou l'usage de techniques qui réduisent la rentabilité technique et économique des procédés. En effet, il faut dans ce cas recourir à des procédés de lixiviation alcaline aux sulfures, de lixiviation acide au Chlore, suivie éventuellement d'une électrodéposition en cellule à diaphragme, ou d'une oxydation en autoclave.

### Résumé de l'invention

Pour résoudre, au moins partiellement les problèmes liés à l'utilisation des procédés de biolixiviation actuels, les inventeurs ont développé un procédé de récupération d'au moins un métal d'intérêt présent dans un matériau dans lequel les populations bactériennes utilisées lors du processus sont moins exposées à la présence de composés toxiques et/ou inhibiteurs des étapes d'un procédé de biolixiviation, notamment en mettant en oeuvre des cultures de bactéries immobilisées par inclusion et par l'effet des phénomènes de limitation diffusionnelle de matière au sein de la matrice d'inclusion qui sont inhérentes à cette technique. Ainsi, même en présence de tels composés, les populations bactériennes utilisées sont à même de permettre le déroulement des différentes étapes d'un processus de biolixiviation.

Un but de l'invention est donc de mettre en oeuvre un procédé permettant la biolixiviation d'au moins un métal d'intérêt présent dans un matériau dont la mise en oeuvre permet une récupération de l'au moins un métal d'intérêt avec un rendement plus élevé, tout en ayant un procédé plus rapide. Un autre but de l'invention est de mettre en oeuvre un procédé permettant de réaliser une biolixiviation d'un large panel de matériau présentant des compositions variables quant à leurs compositions qualitatives en métaux non-ferreux, nobles et des « contaminants » comme l'Arsenic, l'Antimoine, le Mercure et le Bismuth, le Magnesium, le Thalium, le Chlore, le Fluor, les hydrocarbures aromatiques polycycliques (HAP). L'invention permet également un procédé plus rapide par la mise en oeuvre de cultures bactériennes concentrées inclues, ce qui assure une plus haute densité cellulaire, et donc en agent biocatalytique, qu'en culture libre.

L'invention est définie par les revendications indépendantes. Les revendications dépendantes définissent des modes de réalisation préférés de l'invention.

Selon l'invention il est fourni un procédé de biolixiviation indirecte pour extraire au moins un métal présent dans un matériau, et comprenant les étapes de :
a) fourniture d'un ion ferreux dans un premier espace de réaction,
b) oxydation de l'ion ferreux fourni en ion ferrique dans un second espace de réaction,
c) biolixiviation dudit au moins un métal par ledit ion ferrique dans un troisième espace de réaction,
**caractérisé en ce que** l'étape de fourniture d'un ion ferreux est réalisée,
i) soit par une biolixiviation d'un fer présent au sein du matériau par une première population bactérienne (B1) oxydant le fer et inclue dans une première matrice d'inclusion et immergée dans un premier milieu réactionnel présent au sein du premier espace de réaction,
ii) soit par une lixiviation acide d'un fer présent au sein du matériau par un ajout d'un acide fort, préférentiellement l'acide sulfurique, dans le premier espace de réaction,
iii) soit par l'ajout d'ions ferreux,
de façon à obtenir une concentration en ions ferreux comprise entre 2 g/l et 50 g/l dans le premier milieu réactionnel,
**et en ce que** les étapes d'oxydation de l'ion ferreux et de biolixiviation dudit au moins un métal sont chacune réalisées dans un espace de réaction comprenant un milieu réactionnel et une population bactérienne (B2, B3) comprenant au moins une population de bactéries acidophiles oxydant le fer, chacune des populations bactériennes (B2, B3) étant inclue dans une matrice d'inclusion cellulaire immergée dans chacun des milieux réactionnels de chaque espace de réaction, les milieux réactionnels, les populations bactériennes et les matériaux présents dans les différents espaces de réaction pouvant être transférés entre ces différentes espaces de réaction,
**et en ce qu**'une oxydation itérative d'un ion ferreux, résultant de la biolixiviation dudit au moins un métal, en un ion ferrique est réalisée par la population bactérienne (B3) présente dans le troisième espace de réaction,

**et en ce que** les espaces de réaction sont différents et les populations bactériennes (B1, B2, B3) ne sont pas identiques.

En effet, grâce à la présence d'une population bactérienne inclue dans une matrice cellulaire immergée, il est possible d'avoir une haute densité cellulaire au sein des espaces de réactions, entrainant des taux d'oxydation volumiques supérieurs aux taux d'oxydations volumiques des procédés classiques en cultures libres. De plus, de par la présence des bactéries au sein d'une matrice d'inclusion, la présence de molécules au sein du matériau éventuellement relarguées dans le milieu réactionnel et ayant un potentiel pouvoir nocif envers les micro-organismes n'est pas un obstacle à la réalisation du procédé selon l'invention, du fait de l'atténuation de leur pouvoir nocif par la présence d'une matrice d'inclusion et des phénomènes de limitation diffusionnelle que celle-ci implique. Avec une matrice d'inclusion cellulaire, il est en outre possible de procéder à des cultures mixtes de cellules (ou consortium bactériens), une même matrice comprenant plusieurs souches de bactéries, et/ou plusieurs espèces ou genres bactériens, dans des proportions qui peuvent être établies par exemple grâce à différents taux d'inoculation initiaux au sein de la matrice d'inclusion en fonction de la nature du matériau à traiter afin de biolixivier au moins un métal d'intérêt. Enfin, avec un tel procédé, la séparation physique des micro-organismes, du milieu de réaction et du matériau est assurée, permettant une récupération aisée des métaux biolixiviés en solution dans le milieu réactionnel, des bactéries inclues, permettant leur réutilisation, et des matériaux résiduaires en fin de processus.

Un autre but de l'invention est d'avoir un procédé dont les micro-organismes utilisés lors des différentes étapes sont plus adaptés à des conditions défavorables de réaction au sein des milieux réactionnels où se déroulent les différentes étapes d'un procédé de biolixiviation. Chacune des populations bactériennes utilisée peut ainsi être adaptée spécifiquement à une étape déterminée du procédé selon l'invention.

Ainsi, selon un mode de réalisation préférée de l'invention le procédé comprend, dans le premier espace de réaction comprend une première population bactérienne (B1) inclue dans une première matrice d'inclusion cellulaire, ladite première population bactérienne ayant, préalablement à son utilisation dans l'étape a) du procédé et lorsque le fer est présent au sein du matériau, subi une acclimatation par la culture de ladite première population bactérienne dans un milieu d'acclimatation, ledit milieu d'acclimatation comprenant le matériau, ledit milieu d'acclimatation étant remplacé par un milieu d'acclimatation frais lorsque le potentiel redox du milieu d'acclimatation atteint une valeur supérieure à 550mV, préférentiellement supérieure à 600mV, et encore plus préférentiellement supérieure à 650mV, ledit milieu d'acclimatation frais étant complété à chaque remplacement par une concentration croissante en matériau, ladite concentration croissante évoluant par pas de 2 g/l à 20 g/l en matériau, jusqu'à ce que la concentration du matériau dans le milieu soit comprise entre 2 g/l et 200 g/l, plus préférentiellement entre 50 g/l et 150 g/l, et encore plus préférentiellement la concentration est égale à 70 g/l et 80 g/l.

En effet, le procédé comprenant ces étapes est plus efficace car les micro-organismes utilisés sont acclimatés avant leur utilisation, et il est possible d'acclimater séparément chacune des populations bactériennes en fonction de l'étape dans laquelle elle sera utilisée, notamment en modulant la concentration en fer et/ou en matériau présents dans les milieux d'acclimatation.

De manière plus préférée, le procédé selon l'invention utilise des populations bactériennes (B1, B2, B3) comprenant bactéries acidophiles en cultures pures ou en cultures mixtes présentant au moins une caractéristique parmi chacun des groupes suivants sélectionnées parmi les groupes comprenant les bactéries hétérotrophes, mixotrophes, autotrophes, chemoautotrophes ou chemilithoautotrophes oxydant le fer et/ou le soufre et/ou des formes réduites du soufre, psychrophiles, mésophiles, modérément thermophiles, hyperthermophiles, acidophiles, lesdites bactéries ayant un pH de croissance et d'activité se situant entre 0,5 et 3,0, et plus préférentiellement le groupe comprenant les bactéries Acidiferrobacter thiooxydans, Acidithiobacillus ferrooxidans, Leptospirillum ferrooxidans, Leptospirillum ferriphilum, Acidimicrobium ferrooxidans, Sulfobacillus thermosulfidooxidans, Acidithiobacillus caldus, Acidianus brierley, Sulfobacillus acidophilus, Actinobacterium sp., Acidocaldus organivorans, Alicyclobacillus ferroplasma.

En utilisant ces populations bactériennes, le procédé selon l'invention fonctionne encore mieux, et ces populations bactériennes ont montré un potentiel d'acclimatation et de propagation au sein d'une matrice cellulaire d'inclusion tout à fait satisfaisant dans le cadre du procédé de biolixiviation.

### Description détaillée de modes de réalisation de l'invention

Le procédé de biolixiviation indirecte pour extraire au moins un métal présent dans un matériau comprend les étapes de :
a) fourniture d'un ion ferreux dans un premier espace de réaction,
b) oxydation de l'ion ferreux fourni en ion ferrique dans un second espace de réaction,
c) biolixiviation dudit au moins un métal par ledit ion ferrique dans un troisième espace de réaction,
**caractérisé en ce que** l'étape de fourniture d'un ion ferreux est réalisée,
i) soit par une biolixiviation d'un fer présent au sein du matériau par une première population bactérienne (B1) oxydant le fer et inclue dans une première matrice d'inclusion et immergée dans un premier milieu réactionnel présent au sein du premier espace de réaction,
II) soit par une lixiviation acide d'un fer présent au sein du matériau par un ajout d'un acide fort, préférentiellement l'acide sulfurique, dans le premier espace de réaction,
III) soit par l'ajout d'ions ferreux,
de façon à obtenir une concentration en ions ferreux comprise entre 2 g/l et 50 g/l dans le premier milieu réactionnel,
**et en ce que** les étapes d'oxydation de l'ion ferreux et de biolixiviation dudit au moins un métal sont chacune réalisées dans un espace de réaction comprenant un milieu réactionnel et une population bactérienne (B2, B3) comprenant au moins une population de bactéries acidophiles oxydant le fer, chacune des populations bactériennes (B2, B3) étant inclue dans une matrice d'inclusion cellulaire immergée dans chacun des milieux réactionnels de chaque espace de réaction, les milieux réactionnels, les populations bactériennes et les matériaux présents dans les différents espaces de réaction pouvant être transférés entre ces différentes espaces de réaction,
**et en ce qu**'une oxydation itérative d'un ion ferreux, résultant de la biolixiviation dudit au moins un métal, en un ion ferrique est réalisée par la population bactérienne (B3) présente dans le troisième espace de réaction,
**et en ce que** les espaces de réaction sont différents et les populations bactériennes (B1, B2, B3) ne sont pas identiques.

Un processus de biolixiviation indirecte est défini comme étant un processus dans lequel un métal est oxydé et solubilisé par un agent oxydant, un ion ferrique issu de l'oxydation de l'ion ferreux par les bactéries ; la solubilisation des métaux est assurée chimiquement par l'oxydant Fe(III) généré biologiquement par opposition à d'autres mécanismes microbiens reposant sur des activités enzymatiques qui nécessitent un contact entre la membrane cellulaire de la bactérie et le matériau (biolixiviation directe ou « de contact »).

Le matériau peut se présenter sous la forme de déchets industriels ou sous-produits industriels comprenant au moins un métal d'intérêt. Le matériau peut de préférence se présenter sous la forme de suspensions concentrées de fines particules (comme des « boues »), de scories, de poussières, de poudres, de fins granulats, ou sous toute forme pouvant faire l'objet d'une réduction granulométrique sous forme de poudre ou de granulat par des procédés mécaniques et/ou physiques. Selon un mode préférentiel de réalisation de l'invention, le procédé s'applique sur un matériau étant sous forme de poudre et présentant une taille de particules inférieure à 1 mm, préférentiellement inférieure à 0,5 mm, et encore plus préférentiellement inférieure à 0,1 mm. La taille des particules d'un matériau peut par exemple être déterminée avec la méthode décrite dans la norme ISO 4497-1983 («Détermination de la granulométrie par tamisage à sec - Poudres métalliques »). A titre d'exemple, les matériaux peuvent provenir de chutes des usines métallurgiques, des industries chimiques/pétrochimiques (catalyseurs), des résidus de traitement pour la récupération de métaux par voie hydrométallurgique (résidus de cémentation) ou électrochimique (boues anodiques), des chutes des industries pharmaceutiques, du verre, de la pyro-métallurgie, du raffinage, de la finition métallique (galvanoplastie), des chutes d'usines de transformation, de produits électroménagers en fin de vie (poussières, broyats), du recyclage de déchets électriques et électroniques, de batteries, de cendres issues de l'incinération d'ordures ménagères, de déchets et résidus issus des activités de de l'industrie métallique et mécanique (automobile comme des poudres issues du polissage de plaquettes de freins, aéronautique,...). De façon préférentielle, les étapes de fourniture d'un ion ferreux, d'oxydation et de biolixiviation du procédé selon l'invention se déroulent dans des espaces de réactions soumis à une agitation mécanique, pneumatique ou hydraulique assurant la mise en suspension des matériaux, et toujours préférentiellement ainsi qu'à un coefficient de transfert volumique d'oxygène (Kₗa) compris entre 0.010 s⁻¹ et 1 s⁻¹, préférentiellement de l'ordre de 0,030 s⁻¹ à 0,050 s⁻¹. Une acidification du milieu réactionnel peut être réalisée. Elle peut être assurée par ajout d'acide sulfurique d'origine chimique ou biologique ou par la présence dans ledit milieu réactionnel ou dans un réacteur connexe déversant dans les différents espaces de réaction des souches *d'Acidithiobacillus thiooxidans* et de soufre élémentaire ou d'autre sources de soufre réduit comme le thiosulfate à une concentration de 2g/l à 20g/l qui est oxydé biologiquement en acide sulfurique selon l'équation 2S⁰ +2H₂0 + 3O₂ → 2H₂SO₄. De façon préférentielle, le matériau comprend du fer et l'étape de fourniture d'un ion ferreux est réalisée au moins partiellement, i) soit par une biolixiviation du fer présent au sein du matériau par une première population bactérienne (B1) oxydant le fer et inclue dans une première matrice d'inclusion et immergée dans un premier milieu réactionnel présent au sein du premier espace de réaction, ii) soit par une lixiviation acide du fer présent au sein du matériau par un ajout d'un acide fort, préférentiellement l'acide sulfurique, dans le premier espace de réaction.

De façon préférentielle, le matériau est sélectionné parmi le groupe des déchets, sous-produits ou résidus industriels comprenant des métaux non-ferreux et/ou des métaux nobles, ledit matériau étant composé d'au moins un métal en combinaison éventuelle avec du fer, ledit métal étant sélectionné dans le groupe comprenant du cuivre, du zinc, du nickel, de l'étain, de l'aluminium, de l'or, de l'argent, du platine, du rhodium, du ruthénium, de l'iridium, de l'osmium, du palladium, du titane, du cobalt, du vanadium, du molybdène, du tungstène, du béryllium, du bismuth, du cérium, du cadmium, du niobium, du technétium, de l'indium, du gallium, du germanium, du lithium, du sélénium, du tantale, du tellurium, de l'arsenic, de l'antimoine, du bismuth, du plomb, du mercure, ou une combinaison de ces métaux.

Les étapes du procédé peuvent se dérouler dans un bioréacteur. Les différentes étapes biologiques peuvent se dérouler en mode « continu » ou en mode « semi-continu ». Les deux modes de réalisation consistent en la présence permanente d'une biomasse inclue dans la matrice d'inclusion immergée au sein de chacun des espaces de réaction. Une inclusion est définie comme une incorporation de micro-organismes dans la matrice d'un polymère plus ou moins rigide, synthétique (polyacrylamide par exemple) ou naturel (protéine comme la gélatine ou polysaccharide comme la cellulose, l'agar-agar ou les alginates). Ainsi, la matrice d'inclusion peut se présenter sous diverses formes telles que par exemple des parallélépipèdes, des sphères (ou « billes »), des cylindres ou toute forme géométrique autorisée par les différentes techniques d'encapsulation bactérienne et permettant leur utilisation en bioréacteur. Dans le mode semi-continu, les milieux réactionnels et le matériau sont mis en oeuvre de façon discontinue et itérative alors que la biomasse reste en place et ne nécessite pas de phases de latence et de croissance préalables à chaque lot réactionnel caractéristiques du mode « batch » avec des micro-organismes non inclues : en mode semi-continu, un milieu réactionnel comprenant une population bactérienne inclue dans une matrice d'inclusion et le matériau si sa présence est nécessaire sont mis en place dans un bioréacteur jusqu'à ce que l'activité recherchée soit achevée. Le milieu réactionnel, et le matériau s'il est présent, sont ensuite transférés dans un autre espace de réaction ou une autre activité se déroule. En mode continu, les milieux réactionnels et le matériau sont ajoutés et prélevés de façon continue dans chaque espace de réaction à des débits (pour le milieu liquide) et à des charges massiques horaires (pour les matériaux solides pulvérulents) prédéterminés pour assurer des temps de séjour dans les bioréacteurs assurant un traitement optimal du matériau.

Il est également possible de remplacer la population bactérienne présente au sein d'un espace de réaction suite à chaque étape du procédé, le milieu réactionnel restant présent au sein de l'espace de réaction, ainsi que le matériau s'il est présent. Dans ce mode de réalisation, le même espace de réaction est utilisé pour réaliser l'ensemble du processus de biolixiviation de l'au moins un métal d'intérêt, mais cet espace de réaction comprend un milieu réactionnel, une population bactérienne, et un matériau s'il est présent, spécifiques selon l'étape du processus, définissant ainsi les différents espaces de réaction de manière temporelle et non plus physique.

L'étape de fourniture d'un ion ferreux peut se faire par une biolixiviation d'un fer présent dans le matériau. Dans ce cas, le matériau est présent au sein du premier espace de réaction. Cette étape peut se dérouler dans tout type d'espace de réaction comme par exemple un bioréacteur permettant la mise en oeuvre d'une population bactérienne inclue dans une matrice d'inclusion par encapsulation et immergée dans le milieu réactionnel, en mode continu ou « semi-continu». La biolixiviation se fait grâce à la présence de la première population bactérienne par des processus de redoxolyse et d'acidolyse, qui transforment les différentes formes de fer présentes dans le matériau en ion ferreux. De façon préférentielle, le premier milieu réactionnel présente un pH inférieur à 3,0. On privilégiera ce mode de fourniture d'un ion ferreux lorsque le matériau présente une teneur intrinsèque en fer comprise entre 5% et 80%, comme par exemple des poussières de plaquettes de freins. L'étape de fourniture d'un ion ferreux peut alternativement, ou complémentairement, se faire également par l'ajout d'un ion ferreux directement dans le premier milieu de réaction. Cet ajout peut se faire par exemple par l'ajout d'ions ferreux provenant d'une solution. En fonction du matériau à traiter, l'objectif de cette étape est d'obtenir une concentration en ions ferreux dans le premier milieu réactionnel comprise entre 2g/l et 50g/l dans le premier milieu réactionnel, de manière plus préférentielle, entre 2g/l et 10g/l.

L'étape de fourniture d'un ion ferreux est stoppée, ou lorsque le procédé se déroule en mode continu le débit prédéterminé du milieu réactionnel et la charge massique horaire en matériau sont déterminés, lorsqu'une transition entre l'étape de fourniture de l'ion ferreux et l'étape d'oxydation de l'ion ferreux en ion ferrique apparait. Cette transition correspond au moment à partir duquel la courbe de potentiel redox du milieu, qui s'établit lors de la biolixiviation du Fer en Fer (II) à une valeur initiale minimale de 350±50 mV (comprise entre 300mV et 400mV) selon les conditions opératoires, montre une tendance à augmenter pour culminer à la valeur de 600±50 mV (comprise entre 550mV et 650mV) qui correspond à la présence majoritaire dans les conditions opératoires du Fer à l'état d'oxydation Fe(III). Cette transition peut, par exemple, être déterminée par dosage spécifique du Fer(II) et du Fer(III) par la méthode courante à l'ortho-phénanthroline et à l'hydroxylamine par exemple : la transition est effective quand la concentration en Fe(II) dans le milieu réactionnel est maximale et qu'elle marque une tendance à diminuer au profit de celle en Fer(III). Ainsi, il est préférable de stopper cette réaction lorsque le potentiel redox atteint une valeur légèrement supérieure au potentiel redox initial dans le premier espace de réaction. Ainsi, la réaction est stoppée lorsque la valeur de potentiel redox, qui présente une valeur initiale de 350 mV+/-50mV selon les conditions de travail et selon le matériau traité atteint une valeur supérieure de plus de 80 mV à la valeur du potentiel redox initiale du milieu d'acclimatation, préférentiellement 50mV, encore plus préférentiellement, 20mV : le premier milieu réactionnel, et le matériau s'il est présent, sont transférés dans d'autres espaces de réaction, ou le contact entre le milieu réactionnel et la première population bactérienne inclue dans une première matrice d'inclusion, si elle est présente, est arrêté par le remplacement de la première population bactérienne par la seconde population bactérienne inclue dans une seconde matrice d'inclusion après séparation du matériau du milieu, par exemple, par décantation et séparation de phases.

De façon préférentielle, les conditions de réaction pour la conduite de l'étape de fourniture d'un ion ferreux comprennent un rapport de masse entre la masse de la première population bactérienne inclue dans une première matrice d'inclusion cellulaire et la masse totale au sein du premier espace de réaction (masse du milieu réactionnel et masse de la première population bactérienne inclue dans une première matrice d'inclusion cellulaire) compris entre 5% et 74%, de préférence entre 5% et 30%. De façon toujours préférentielle, le taux d'aération est compris entre 0,1 vvm et 2,0 vvm (volume d'air injecté dans le milieu réactionnel par volume de milieu réactionnel et par minute), l'air étant éventuellement enrichi de 0.1 % à 10% en CO₂. La diffusion de l'air au sein du réacteur peut être réalisée par un élément assurant un coefficient de transfert volumique d'oxygène (Kₗa) compris entre 0,010 s⁻¹ et 1 s⁻¹, préférentiellement de l'ordre de 0,030 s⁻¹ à 0,050 s⁻¹. Un tel élément peut être un diffuseur torique, diffuseur à fines bulles en céramique ou en élastomères de type EPDM. De façon toujours préférentielle, le milieu réactionnel est un milieu Lundgren-Silverman 9K (ou milieu de type 9K), et la température de réaction est comprise entre 15°C et 40°C selon la composition de la population bactérienne utilisée. De façon encore plus préférentielle, le pH du premier milieu réactionnel est compris entre 0,5 et 3,0, et de façon encore plus préférentielle, entre 1,5 et 2,0.

Un milieu de type 9K est un milieu pour la croissance et l'activité des bactéries acidophiles oxydant le Fer tel que décrit en 1959 par Lundgren & Silverman (Silverman MP and Lundgren DG, 1959, Studies on the chemoautotrophic iron bacterium Ferrobacillus ferrooxidans. I. An improved medium and a harvesting procedure for securing high cell yields, J. Bacteriol., 77, 642-647) et pouvant comprendre du (NH₄)₂SO₄, du MgSO₄.7H₂O, du K₂HPO₄, du KCI, du CaCl₂.2H₂O, et/ou du Ca(NO₃)₂, et du FeSO₄ sous forme hydratée ou non. La composition de ce milieu peut varier en termes de composés, de concentrations, d'acidification et d'apports en traces minérales (Mn, ZN, Co, Mo, Cu, B,...). De nombreuses variantes et adaptations peuvent être relevées dans la littérature scientifique (Milieu Mackintosh dans Lewis et al. 2011, milieu 9K modifié dans Long et al. 2004) en fonction des matériaux traités, des micro-organismes exploités et des conditions de biolixiviation.

De façon préférentielle, l'étape a) de fourniture d'ions ferreux est réalisée avec un rapport de volume entre la première population bactérienne (B1) inclue dans une première matrice d'inclusion cellulaire et le volume du premier espace de réaction compris entre 5% et 74%, lorsque un fer est présent dans le matériau, en ce que le pH dudit premier milieu réactionnel est compris entre 0,5 et 3,0, et en ce que la concentration en matériau au sein du premier espace réactionnel est comprise lorsque ledit matériau contient un fer, entre 20 g/l et 200g/l, préférentiellement entre 50 g/l et 150 g/l et, encore plus préférentiellement entre 70 g/l et 80 g/l en matériau dans le milieu réactionnel.

L'étape d'oxydation de l'ion ferreux fourni en ion ferrique se déroule dans un second espace de réaction. Si le matériau est présent dans le premier milieu réactionnel, il est possible de séparer le matériau du milieu avant l'introduction de la seconde population bactérienne par des méthodes courantes de séparation d'un solide en suspension dans un liquide, par exemple par décantation suivie d'une séparation de phases, filtration ou centrifugation. Cette étape d'oxydation du Fer (II) en Fer (III) préalable à la biolixiviation permet l'obtention d'un rendement global du procédé plus élevé grâce à une réduction du temps de l'étape ultérieure de biolixiviation de l'au moins un métal. Le second espace peut soit être un espace de réaction séparé, soit le même espace de réaction que le premier espace de réaction, mais dans lequel la première population bactérienne a été remplacée par une seconde population bactérienne et après séparation du matériau du milieu réactionnel par les techniques courantes de décantation suivie d'une séparation de phases, filtration, et/ou centrifugation. Cette étape peut se dérouler dans tout type d'espace de réaction comme par exemple un bioréacteur permettant la mise en oeuvre d'une population bactérienne inclue dans une matrice d'inclusion par encapsulation et immergée dans le milieu réactionnel, en mode continu ou « semi-continu». L'oxydation est catalysée par la seconde population bactérienne. L'étape d'oxydation est accomplie et stoppée, ou lorsque le procédé se déroule en mode continu le débit prédéterminé du milieu réactionnel est déterminé, lorsque la totalité de l'ion ferreux présent est oxydée en fer ferrique. Par exemple, ce paramètre peut être déterminé par un dosage des ions (par exemple à l'ortho-phénanthroline ou par un suivi du potentiel redox du second milieu réactionnel : lorsque la mesure de ce paramètre atteint un maximum stable à une valeur de l'ordre de 600±50 mV, la totalité des ions ferreux initialement présents sont sous forme d'ion ferrique. L'arrêt de cette étape d'oxydation peut se faire soit par le transfert du second milieu réactionnel dans un autre espace de réaction, ou par arrêt du contact entre le second milieu réactionnel et la seconde population bactérienne inclue dans une seconde matrice d'inclusion réalisé par le remplacement de la seconde population bactérienne par la troisième population bactérienne inclue dans une troisième matrice d'inclusion.

De façon préférentielle, les conditions de réaction pour la conduite de l'étape d'oxydation d'un fer ferreux en fer ferrique sont un rapport de masse entre la masse de la seconde population bactérienne inclue dans une seconde matrice d'inclusion cellulaire et la masse totale au sein du second espace de réaction (masse du milieu réactionnel et masse de la seconde population bactérienne inclue dans une seconde matrice d'inclusion cellulaire) compris entre 5% et 74%, de préférence entre 5% et 30%. De façon toujours préférentielle, le taux d'aération est compris entre 0,1 vvm et 2,0 vvm (volume d'air injecté dans le milieu réactionnel par volume de milieu réactionnel et par minute), éventuellement enrichi de 0.1 % à 10% en CO₂. La diffusion de l'air au sein du réacteur peut être réalisée par un élément assurant un coefficient de transfert volumique d'oxygène (Kₗa) compris entre 0,010 s⁻¹ et 1 s⁻¹, préférentiellement de l'ordre de 0,030 s⁻¹ à 0,050 s⁻¹. Un tel élément peut être un diffuseur torique, diffuseur à fines bulles en céramique ou en élastomères de type EPDM. De façon toujours préférentielle, le milieu réactionnel est un milieu Lundgren-Silverman 9K, et la température de réaction est comprise entre 15°C et 40°C selon la composition de la population bactérienne utilisée. De façon encore plus préférentielle, le pH du second milieu réactionnel est compris entre 0,5 et 3,0, et de façon encore plus préférentielle, entre 1,5 et 2,0 et toujours de manière plus préférentielle le pH est égal à 1,75.

De façon préférentielle, l'étape b) d'oxydation des ions ferreux en ions ferriques est réalisée avec un rapport de volume entre la seconde population bactérienne (B2) inclue dans une seconde matrice d'inclusion cellulaire et le volume du second espace de réaction compris entre 5% et 74%, ledit second milieu réactionnel consistant en le premier milieu réactionnel après l'étape a) de fourniture d'un ion ferreux et en ce que la concentration en ions ferreux est ajustée entre 2 g/l et 50 g/l, et en ce que le pH du milieu réactionnel est inférieur à 3,0.

L'étape de biolixiviation d'au moins un métal d'intérêt consiste en la lixiviation des métaux présents au sein du matériau qui entrent spontanément dans une réaction d'oxydation-réduction avec le couple Fe(III)/Fe(II) dans les conditions opératoires de l'étape. Cette étape peut se dérouler dans tout type d'espace de réaction comme par exemple un bioréacteur permettant la mise en oeuvre d'une population bactérienne inclue dans une matrice d'inclusion par encapsulation et immergée dans le milieu réactionnel, en mode continu ou « semi-continu». Selon ce mode de réalisation, la biolixiviation est opérée sur les matériaux bruts ou issus d'une étape d'acidification et/ou d'extraction de substances inhibant une activité bactérienne de biolixiviation et/ou une activité d'oxydation de fer, ou sur des matériaux provenant de l'étape de biolixiviation du fer intrinsèque pour les déchets qui en contiennent. Le troisième milieu réactionnel est constitué du second milieu réactionnel. La quantité de matériau mise en suspension dans le troisième milieu de réaction dépend de la nature de ces éléments et de leur teneur en composés inhibant et/ou toxiques. Durant cette étape de biolixiviation du métal d'intérêt présent dans le matériau, les ions ferriques sont réduits en ions ferreux dans le procédé de biolixiviation par réaction avec l'au moins un métal d'intérêt, et les ions ferreux ainsi produits sont ré-oxydés en ions ferriques par la population bactérienne présente dans le troisième espace de réaction. Cette oxydation est itérative, c'est-à-dire qu'elle se déroule tant que des ions ferreux sont produits lors de la biolixiviation du métal d'intérêt. L'étape de biolixiviation d'au moins un métal présent dans le matériau est accomplie et peut donc être stoppée lorsque l'ensemble du fer présent dans le milieu réactionnel est sous forme oxydée Fer(III), ce qui traduit le fait que l'ensemble de l'au moins un métal d'intérêt disponible et mobilisable au sein du matériau a fait l'objet d'une biolixiviation et qu'aucune forme élémentaire ou réduite de l'au moins un métal d'intérêt ne peut plus être oxydée par l'ion ferrique.

De façon préférentielle, les conditions de réaction pour la conduite de l'étape de biolixiviation sont un rapport de masse entre la masse de la troisième population bactérienne inclue dans une troisième matrice d'inclusion cellulaire et la masse totale au sein du troisième espace de réaction (masse du milieu réactionnel et masse de la troisième population bactérienne inclue dans une troisième matrice d'inclusion cellulaire) compris entre 5% et 74%, de préférence entre 5% et 30%. De façon toujours préférentielle, le taux d'aération est compris entre 0.1 vvm et 2.0 vvm (volume d'air injecté dans le milieu réactionnel par volume de milieu réactionnel et par minute), éventuellement enrichi de 0.1% à 10% en CO₂. La diffusion de l'air au sein du réacteur peut être réalisée par un élément assurant un coefficient de transfert volumique d'oxygène (Kₗa) compris entre 0.010s⁻¹ et 1s⁻¹, préférentiellement de l'ordre de 0,030s⁻¹ à 0,050s⁻¹. Un tel élément peut être un diffuseur torique, diffuseur à fines bulles en céramique ou en élastomères de type EPDM. De façon toujours préférentielle, le milieu réactionnel est un milieu 9K, et la température de réaction est comprise entre 15°C et 40°C selon la composition de la population bactérienne utilisée. De façon encore plus préférentielle, le pH du second milieu réactionnel est compris entre 0,5 et 3,0, et de façon encore plus préférentielle, entre 1,5 et 2,0 et toujours de manière plus préférentielle le pH est égal à 1,75.

De façon préférentielle, l'étape c) de biolixiviation dudit au moins un métal est réalisée avec un rapport de volume entre la troisième population bactérienne (B3) inclue dans une troisième matrice d'inclusion cellulaire et le volume du troisième espace de réaction compris entre 5 et 74%, ledit troisième milieu réactionnel consistant au second milieu réactionnel après l'étape b) d'oxydation du fer ferreux en fer ferrique, un pH du milieu réactionnel étant compris entre 0,5 et 3,0 et en ce que la concentration en matériau est comprise entre 20 et 200g/l, préférentiellement entre 50 et 150 g/l et, encore plus préférentiellement entre 70 g/l et 80 g/l en matériau dans le milieu réactionnel, ledit matériau consistant au matériau après lixiviation du fer par la première population bactérienne (B1) lorsque le matériau contient du fer, et/ou du matériau issu de l'étape d'acidification et/ou d'extraction de substances inhibant une activité bactérienne de biolixiviation et/ou une activité d'oxydation de fer.

Par population bactérienne inclue dans une matrice cellulaire d'inclusion, il faut comprendre qu'une biomasse comprenant une population bactérienne a été, préalablement à son utilisation dans le procédé, inclue au sein d'une matrice d'inclusion de cellules bactériennes, ladite matrice permettant aux cellules d'être en contact avec le milieu réactionnel liquide par diffusion du milieu à travers la matrice. Par matrice immergée, il faut comprendre que la biomasse inclue dans la matrice est présente dans le milieu réactionnel liquide.

Chacune des étapes du procédé peut se dérouler en bioréacteur de type bioréacteur aéré en cuve agitée (« Aerated Stirred Tank Reactor »), utilisé en mode semi-continu, ou éventuellement en cascade (« Continuous Flow Séries of Tanks »), ou éventuellement en continu (« Aerated CSTR, Aerated Continuous Stirred Tank reactor ») ou en Réacteur « gas lift » ou « air lift » à entrainement gazeux. Les réacteurs exploitables dans le cadre de cette invention peuvent permettre en outre la séparation physique de la population bactérienne au sein d'une matrice d'inclusion afin d'éviter tout mélange avec les matériaux en vue d'en assurer la séparation ultérieure tout en assurant le transfert de matière (sels nutritifs, Fe(III), Fe(II), O2,...). Les populations bactériennes inclues dans une matrice peuvent par exemple être contenues physiquement dans des compartiments séparés au sein du bioréacteur mais au travers desquels le milieu réactionnel peut diffuser pour assurer les transferts de matière au niveaux moléculaire et élémentaire comme des nacelles, des bougies de filtration, ou poches en tissu synthétique, en treillis en matériaux naturels ou synthétiques (PP, PE, PTFE, Polyamide, PVDF,...) résistant aux conditions d'acidité et présentant une maille telle que la matrice colonisée est contenue pour éviter qu'elle ne se mêle aux matériaux en suspension dans le réacteur. Cependant, la méthode peut être envisagée par suspension directe des matrices colonisées dans un espace réactionnel contenant un milieu réactionnel et les matériaux sans séparation physique entre les deux phases solides qui sont dès lors séparées sur base de leur différence de densité, par exemple.

Selon un mode de réalisation préférentiel, le procédé est **caractérisé en ce que** ladite étape de biolixiviation dudit au moins un métal est réitérée lorsque la quantité dudit au moins un métal dans le matériau après une étape de biolixiviation est supérieur à 20% de la quantité initiale dudit au moins un métal au sein du matériau, et plus préférentiellement supérieur à 50%, et encore plus préférentiellement supérieur à 80%. La quantité de métal biolixivié est définie selon la formule (1-(Mr/Mi))*100 où Mr est la teneur en métal d'intérêt exprimée en g/kg dans le matériau résiduaire (soit le matériau ayant subi la ou les étapes de biolixiviation) et Mi est la teneur en métal d'intérêt exprimée en g/kg dans le matériau initial, soit n'ayant pas encore subi une étape de biolixiviation.

Selon ce mode de réalisation, lorsque la totalité du fer présent dans le troisième milieu réactionnel est oxydée en fer ferrique, indiquant que l'au moins un métal d'intérêt n'est plus disponible au sein du matériau pour biolixiviation, le matériau est réutilisé dans au moins une étape de biolixiviation, chaque étape supplémentaire étant réalisée avec un troisième milieu réactionnel « frais », c'est-à-dire un milieu issu de l'étape d'oxydation d'un fer ferreux en fer ferrique. Cette étape peut permettre la biolixiviation d'une proportion du métal d'intérêt moins disponible ou moins « mobilisable » au sein du matériau, augmentant ainsi la quantité totale de métal d'intérêt récupéré.

Selon un mode de réalisation préférentiel, le procédé est **caractérisé en ce qu'il** comprend également au moins une des étapes suivantes :
- extraction d'au moins une substance présente dans ledit matériau et inhibant une activité bactérienne de biolixiviation et/ou une activité bactérienne d'oxydation du fer, ladite étape étant réalisée avant l'étape de fourniture d'un ion ferreux,
- Acidification du matériau par la fourniture d'une solution acide de façon à ce que le matériau soit dans une solution dont le pH est stabilisé entre 0,5 et 3,0.

Bien que les populations bactériennes utilisées dans le procédé sont protégées de conditions de réactions défavorables par leur présence au sein d'une matrice d'inclusion, il est possible d'améliorer encore plus le rendement du procédé en séparant, et/ou en neutralisant des composants inhibants ou toxiques, et/ou en modifiant les propriétés physico-chimiques du matériau en l'acidifiant.

L'au moins une substance présente dans ledit matériau et inhibant une activité bactérienne de biolixiviation et/ou une activité bactérienne d'oxydation du fer peut être par exemple les matières organiques réputées toxique pour les bactéries acidophiles autotrophes, notamment pour *Leptospirilum ferrooxidans,* comme par exemple des composés retardateurs de flammes, des molécules organiques telles que HAP, PCB, PCDD, PCDF mais également des molécules ou éléments minéraux exerçant un rôle néfaste à l'égard de la viabilité et/ou de l'activité des micro-organismes comme, par exemple, le Magnésium, le Cobalt et l'Arsenic dans différents états d'oxydation. Les techniques permettant d'extraire au moins un composé inhibiteur peuvent être de diverses natures, comme par exemple physiques (séparation densimétrique, flottation, floculation...), chimiques (par réactions de complexation, d'oxydo-réduction, par action acide (acidolyse), de solvants organiques, de tensio-actifs) ou encore électrochimiques. A titre d'exemple, on peut citer le Magnésium que l'on peut retrouver dans les déchets ou sous-produits spécifiques pulvérulents issus, par exemple, de l'industrie automobile (poussières de plaquettes de freins, poussières d'embrayages...). Ses caractéristiques bactériostatiques ou même bactéricides, selon la concentration, rendent son élimination préférable au bon développement du procédé biologique. Une méthode d'élimination du Magnésium à partir de poussières de plaquettes de freins est une réaction d'acidolyse réalisée par mise en suspension du matériau dans une solution d'acide sulfurique au pH compris entre 1,0 et 2,0.

Dans le cas de matériaux présentant une valeur de pH supérieure à celles préférées dans les étapes ultérieures du traitement (entre 0.5 et 3), cette étape permet également, de manière concomitante ou après séparation/neutralisation des composés inhibants et/ou toxiques, une adaptation du pH des matériaux par acidification. Cette étape est généralement opérée par mise en suspension des matériaux dans une solution acide (acide sulfurique par exemple) ou dans du milieu de culture (type Lundgren-Silverman 9K), avec agitation et adjonction d'acide (sulfurique par exemple), et contrôle et suivi du pH pour un ajustement à une valeur comprise entre 0,5 et 3,0. La régulation du pH des matériaux est considérée comme achevée lorsque la valeur cible est atteinte et reste stable.

Selon un mode de réalisation préférentiel de l'invention, le procédé comporte une étape d'inclusion dans une matrice d'inclusion cellulaire d'une population bactérienne (B1, B2, B3) et l'étape d'inclusion comprend les étapes de :
- Fourniture d'un milieu d'inclusion liquide,
- Fourniture d'un composé matriciel d'inclusion cellulaire dans le milieu d'inclusion selon un rapport de poids à volume entre le composé matriciel d'inclusion et le milieu d'inclusion compris entre 5 g/l et 400 g/l,
- Fourniture d'un inoculum de la population bactérienne dans le milieu d'inclusion,
- Formation d'une matrice d'inclusion cellulaire comprenant la population bactérienne.

Un composé matriciel cellulaire peut comprendre des composants formant un composé matriciel tels que des monomères, des polymères, des pré-polymères, des protomères, des agents ligands, des promoteurs ou des initiateurs de polymérisation.

La présence d'une matrice d'inclusion encapsulant la population bactérienne permet de protéger, au moins partiellement, la population bactérienne de composés inhibants et/ou toxiques présents dans un milieu réactionnel. Selon ce mode de réalisation préférentiel, il est possible d'encapsuler une population bactérienne de façon à permettre l'obtention d'un plus haut rendement du procédé selon l'invention. La présence d'une matrice d'inclusion permet également de réaliser le procédé en utilisant des teneurs en matériaux (ou « pulp density ») supérieures aux teneurs utilisées dans les procédés classiques. De surcroit, la présence d'une population bactérienne au sein d'une matrice d'inclusion permet l'utilisation d'une forte concentration volumique de bactéries (haute densité cellulaire). Enfin, l'inclusion des populations bactériennes au sein d'une matrice d'inclusion permet d'augmenter le rendement de récupération du métal d'intérêt par le déroulement du procédé en mode semi-continu, voire en mode continu, des populations bactériennes contrairement à un déroulement classique du procédé en mode batch utilisant des bactéries en culture libre.

La matrice d'inclusion est une solution de composés matriciels (monomères, prépolymères, protomères ou polymères) ayant la capacité à englober une biomasse bactérienne suite à l'action d'un agent chimique ou de conditions physiques ou photochimiques de gélification, de réticulation ou de polymérisation (agents ligands, initiateurs ou de promoteurs de polymérisation, ultraviolet, condensation,...). De manière préférentielle, le composé matriciel est sélectionné parmi le groupe des polymères naturels ou synthétiques hydrosolubles pouvant former des hydrogels par gélification ionotropique, photochimique, thermique ou par réticulation ou polymérisation, ledit groupe comprenant l'alginate, l'agar, la gerlite (heteropolysaccharide anionique), le chitosan, la kappa-carraghénane, le poly-acrylamide, le polyacrylamide-hydrazide, le co-poly(N-isopropylacrylamide/acrylamide), le polyéthylène glycol, les méthacrylates à base de monomères de méthylacrylamide, d'hydroxyéthylméthacrylate ou de méthylméthacrylate, les résines epoxy les résines photo-réticulables, l'ester de diéthylène glycol, la polyvynilpyrrolidone, le silicone, l'alcool polyvinylique, les monométhacrylates ou diméthacrylates ou diacrylates de polyéthylène glycol, l'hydrogel de polyuréthane, l'hydroxyethyl methacrylate, des résines photo-réticulables ou un mélange de plusieurs de ces composés.

Un milieu d'inclusion est un milieu permettant de mélanger un inoculum bactérien avec une solution de composés matriciels dans le but d'obtenir une population bactérienne inclue dans une matrice d'inclusion solide formant un hydrogel. Ce milieu peut par exemple être une solution aqueuse au pH adapté au type d'hydrogel utilisé à l'aide d'un composé acide ou alcalin ou un milieu de culture bactérienne, par exemple de type Lundgren-Silverman 9K dépourvu ou non de formes de fer selon la compatibilité de cet élément avec le processus de formation de l'hydrogel considéré ou toute variante de ce milieu ne comprenant que un ou plusieurs éléments de ce milieu.

L'inoculum bactérien est une masse de bactéries, séparée de son milieu de culture ou non. Les bactéries sont préalablement récupérées à partir d'une culture de cellules bactériennes. De façon préférentielle, l'inoculum bactérien comprendra une population bactérienne d'environ 10⁸ à 10¹² bactéries/ml. De façon toujours préférentielle et en particulier lorsque le fer peut interférer avec le processus de formation de la matrice d'inclusion, au moins une étape de rinçage de la population bactérienne est présente avant l'étape de formation d'une matrice, afin d'éliminer le fer présent dans le milieu de culture de la population bactérienne, idéalement dans un milieu de type Lundgren-Silverman 9K dépourvu de formes de fer à pH 1,75.

La formation de la matrice consiste à mettre en contact l'inoculum bactérien avec un composé matriciel en présence d'un ou de plusieurs agent(s) (chimiques, physiques ou photo-chimiques) permettant la gélification/réticulation/polymérisation du composé matriciel. Les conditions en fonction du type de composé matriciel utilisé sont bien connues de l'homme du métier, et sont trouvables dans la littérature scientifique et technique (par exemple dans la publication de Nedovic V. et Willaert R., Application of Cell Immobilisation Biotechnolgy 2005 Série « Focus on Biotechnology », Editions Springer).

A titre d'exemple, un inoculum bactérien remis en suspension dans du milieu d'inclusion après centrifugation et comprenant de l'ordre de 10¹⁰ cellules/ml est fourni. Une matrice d'inclusion est préparée en utilisant du PVA (aclool polyvinylique) et de l'alginate de Sodium en combinaison à des concentrations comprises entre 1% à 40% et 0.5% et 20%. Une matrice semi-synthétique est formée à des concentrations finales respectives de 9% et 1% afin d'encapsuler les populations bactériennes. La matrice peut être dissoute par chaufage à une température minimale supérieure à 80°C ou stérilisée (par exemple en chauffant la matrice à une température supérieure à 121 °C durant au moins 20 minutes), puis la matrice est mélangée avec l'inoculum bactérien. Ensuite, un agent de réticulation, de gélification, ou de polymérisation est utilisé en fonction de la nature du composé formant la matrice et le mélange est ensuite extrudé par gravitation, cisaillement mécanique, électromagnétique, ultrasonique ou pneumatique, ou toute technique permettant la formation de structures encapsulant les populations bactériennes telles que des sphères ou des feuilles par exemple. L'agent de polymérisation peut par exemple être dans le cas d'une matrice alginate/PVA une solution comprenant 3% à 6% (p/p) de H3BO3 (acide borique) et 0.5% à 2% de Cacl2.2H2O dans laquelle la solution d'encapsulation comprenant les bactéries est extrudée au goutte-à-goutte pour former des sphères de +/- 3 mm de diamètre d'hydrogel. La réticulation, dans le cas de l'Alcool Polyvinylique, peut alternativement être opérée par plusieurs cycles de congélation-décongélation (technique connue dans la littérature comme technique de « freeze-thawing ») et fournir des feuilles ou de fines couches d'hydrogel qui peuvent ensuite être découpées en cubes de dimension désirée (3 mm de côté, par exemple). Dans un autre exemple mettant en oeuvre un composé matriciel de type polymère à base diméthacrylate de polyéthylène glycol, un inoculum bactérien remis en suspension dans du milieu d'inclusion après centrifugation de la préculture et comprenant de l'ordre de 10¹⁰ cellules/ml est fourni. Une matrice d'inclusion synthétique est préparée en mélangeant le prépolymère de diméthacrylate de polyéthylène glycol d'un poids moléculaire compris entre 200 et 2000 g/mol dans une solution aqueuse à une concentration finale de 100 à 200 g/l en combinaison avec 5 à 10 g/l d'agent promoteur de polymérisation (N,N,N',N'-tetraméthylène diamine) et avec un agent de pontage en concentration finale de 5 à 10 g/l (N,N' méthylène-bis-acrylamide ou tryacrylformal par exemple). La polymérisation de la solution aqueuse de composé matriciel contenant également l'inoculum bactérien est initiée par du persulfate de potassium (2,5 g/l) ; après dix minutes de réaction, l'hydrogel est découpé, par exemple, en cubes de 3mm de côté.

Selon ce mode de réalisation, il est possible qu'une étape de propagation bactérienne soit réalisée après l'étape d'inclusion d'une population bactérienne dans une matrice d'inclusion cellulaire, ladite étape de propagation comprenant les étapes de :
- fourniture d'un milieu de culture permettant à la population bactérienne de se multiplier, le dit milieu de culture comprenant la population bactérienne inclue dans une matrice d'inclusion cellulaire selon un rapport de volume de matrice d'inclusion et de bactéries inclues dans celle-ci sur le volume total compris entre 5 et 74%,
- ajout d'ions ferreux à une concentration initiale comprise entre 2 et 50 g/l,
- remplacements du milieu de culture par un milieu de culture frais lorsque l'oxydation du fer ferreux en fer ferrique est totale, et ajouts d'ions ferreux de façon à obtenir la concentration initiale en ions ferreux,
- arrêt de l'étape de propagation lorsque le temps nécessaire pour oxyder la totalité du fer ferreux en fer ferrique au sein du milieu de culture ne diminue plus.

De façon préférentielle, ce mode de réalisation peut comprendre les étapes de :
- ajustement du pH entre 0,5 et 3,0 du milieu de propagation par un ajout d'acide fort, préférentiellement un acide sulfurique, et de façon encore plus préférentielle, entre 1,5 et 2,0.
- oxygénation du milieu à l'aide d'air comprimé à un taux d'aération compris entre 0,1 vvm et 2,0 vvm (volume d'air injecté dans le milieu réactionnel par volume de milieu réactionnel et par minute), l'air étant éventuellement enrichi de 0.1 % à 10% en CO₂. La diffusion de l'air au sein du réacteur peut être réalisée par un élément assurant un coefficient de transfert volumique d'oxygène (Kₗa) compris entre 0.010s⁻¹ et 1s⁻¹, préférentiellement de l'ordre de 0,030s⁻¹ à 0,050s⁻¹. Un tel élément peut être un diffuseur torique, diffuseur à fines bulles en céramique ou en élastomères de type EPDM.

Le milieu de culture peut par exemple être un milieu classique de type Lundgren-Silverman 9K, dont le pH est compris entre 0,5 et 3,0, en présence d'une concentration en FeSO₄.7H₂O comprise entre 2g/l et 50g/l.

Cette étape de propagation est réitérée jusqu'à atteindre une stabilité de la durée nécessaire pour oxyder la totalité du fer compris dans le milieu de culture et que ce temps ne diminue plus, indiquant une colonisation maximale de la matrice. Le suivi des concentrations des différentes formes du fer présent dans le milieu de culture peut se faire selon les méthodes déjà décrites précédemment.

Selon un mode de réalisation particulier de l'invention, une étape de propagation consistant en une étape de promotion de la croissance des bactéries dans la pré-culture destinée à fournir l'inoculum qui sera inclus dans la matrice d'inclusion. Cette étape de propagation d'une population bactérienne est réalisée avant l'étape d'inclusion de la population bactérienne dans une matrice, ladite étape de propagation comprenant l'étape de :
- Fourniture d'un milieu de propagation comprenant une concentration en fer(II) comprise entre 2 et 50 g/l, le pH dudit milieu de propagation étant compris entre 0,5 et 3,0.
- Fourniture d'un inoculum bactérien représentant de 2% à 10% (v/v) de la culture.

Le milieu de propagation est généralement un milieu de type 9K dont le pH est ajusté entre 0,5 et 2,0. Généralement, le milieu est acidifié à l'aide d'une solution concentrée de H₂SO₄. Le fer peut être fourni sous la forme de FeSO₄.7H₂O. De façon préférentielle, les conditions de croissance de la population bactérienne en vue de la préparation d'un inoculum et destinée à être inclue dans une matrice sont, en bioréacteur de type Stirred Tank Reactor, un débit d'aération du milieu entre 0,1 et 2,0 vvm (volumes d'air par volume de culture par minute), l'air étant éventuellement enrichi en CO2 (de 0,1 à 10%), une agitation assurant une mise en suspension des matériaux et un coefficient de transfert volumique d'oxygène (Kₗa) compris entre 0.010 s⁻¹ et 1 s⁻¹, préférentiellement de l'ordre de 0,030 s⁻¹ à 0,050 s⁻¹, et la température est comprise entre 15°C et 45°C dans le cas de l'exploitation de bactéries mésophiles, 4°C à 15°C dans le cas de bactéries psychrotolérantes, jusqu'à 70°C et plus dans le cas de bactéries modérément thermophiles ou hyperthermophiles. La diffusion de l'air au sein du réacteur peut être réalisée par un élément assurant un coefficient de transfert volumique d'oxygène (Kₗa) compris entre 0,010 s⁻¹ et 1 s⁻¹, préférentiellement de l'ordre de 0,030 s⁻¹ à 0,050 s⁻¹. Un tel élément peut être un diffuseur torique, diffuseur à fines bulles en céramique ou en élastomères de type EPDM. La croissance et l'activité bactériennes sont suivies par numération bactérienne microscopique et à l'aide d'une sonde de potentiel redox, potentiel croissant tout au long de la croissance de la bactérie et de l'oxydation du Fer ferreux en Fer ferrique. L'étape de croissance bactérienne peut être arrêtée lorsque le milieu de croissance contient environ 10⁸ cellules/ml.

Selon un mode de mise en oeuvre préférentiel, le procédé selon l'invention est **caractérisé en ce que** le premier espace de réaction comprend une première population bactérienne (B1) inclue dans une première matrice d'inclusion cellulaire, ladite première population bactérienne ayant, préalablement à son utilisation dans l'étape a) du procédé et lorsque le fer est présent au sein du matériau, subi une acclimatation par la culture de ladite première population bactérienne dans un milieu d'acclimatation, ledit milieu d'acclimatation comprenant le matériau, ledit milieu d'acclimatation étant remplacé par un milieu d'acclimatation frais lorsque le potentiel redox du milieu d'acclimatation atteint une valeur supérieure de plus de 80 mV à la valeur du potentiel redox initiale du milieu d'acclimatation, préférentiellement 50mV, encore plus préférentiellement, 20mV., ledit milieu d'acclimatation frais étant complété à chaque remplacement par une concentration croissante en matériau, ladite concentration croissante évoluant par pas de 2 g/l à 20 g/l en matériau, jusqu'à ce que la concentration du matériau dans le milieu soit comprise entre 2 g/l et 200 g/l, plus préférentiellement entre 50 g/l et 150 g/l, et encore plus préférentiellement la concentration est égale à 70 g/l et 80 g/l.

Le potentiel redox du milieu peut être mesuré par deux demi-piles, ou toute électrode connue de l'homme du métier permettant la mesure expérimentale d'un potentiel d'oxydo-réduction. Le seuil de 550mV, préférentiellement 600mV, et encore plus préférentiellement 650mV, correspond à la présence majoritaire dans les conditions opératoires du Fer à l'état d'oxydation Fe(III).

Le conditionnement des populations bactériennes pouvant comprendre une utilisation du matériau qui sera biolixivié, le conditionnement peut être présent dans le procédé antérieurement à l'étape de fourniture d'un ion ferreux. Cette étape est réalisée après l'inclusion dans une matrice de la population bactérienne. Cette étape permet l'obtention d'une population bactérienne dont le métabolisme est adapté à leur utilisation dans l'un des modes de réalisation du procédé, la rendant plus polyvalente et robuste à d'éventuels effets toxiques d'éléments dissouts à partir du matériau et plus efficace par l'adaptation de la population bactérienne incluse en favorisant au sein de la matrice le développement d'un ou de plusieurs genre(s) ou d'une ou de plusieurs espèce(s) bactérienne(s) comprise(s) dans la culture mixte initiale (ou consortium bactérien initial) et qui présente(nt) plus d'affinité et d'efficacité par rapport à la réaction exploitée dans l'étape considérée.

Selon un mode de mise en oeuvre préférentiel, le procédé selon l'invention est **caractérisé en ce que** le second espace de réaction comprend une seconde population bactérienne (B2) inclue dans une seconde matrice d'inclusion cellulaire, ladite seconde population bactérienne ayant, préalablement à son utilisation dans l'étape b) du procédé et lorsqu'un fer est présent au sein du matériau, subi une acclimatation par la culture de ladite seconde population bactérienne inclue dans une matrice d'inclusion cellulaire dans un second milieu d'acclimatation, ledit second milieu d'acclimatation consistant, aux différents milieux d'acclimatation successifs issus de l'étape d'acclimatation du premier système bactérien desquels a été retiré le matériau, la concentration en fer ferreux étant maintenue à une concentration comprise entre 2 g/l et 50 g/l dans ledit milieu d'acclimatation, ledit milieu d'acclimatation étant éventuellement complété par l'ajout de fer ferreux.

Selon un mode de mise en oeuvre préférentiel, le procédé selon l'invention est **caractérisé en ce que** le troisième espace de réaction comprend une troisième population bactérienne (B3) inclue dans une troisième matrice d'inclusion cellulaire, ladite troisième population bactérienne ayant, préalablement à son utilisation dans l'étape c) du procédé, subi une acclimatation par la culture de ladite troisième population bactérienne inclue dans une troisième matrice d'inclusion cellulaire dans un troisième milieu d'acclimatation, ledit troisième milieu d'acclimatation consistant aux différents milieux successifs issus de l'étape d'acclimatation du deuxième système bactérien et complété avec une concentration croissante par pas de 2 g/l à 20 g/l en matériau traité, ledit matériau traité consistant au premier matériau après acclimatation de la première population bactérienne lorsque le matériau contient du fer, ou le matériau issu de l'étape d'extraction de substances inhibant une activité bactérienne de biolixiviation et/ou une activité d'oxydation de fer, lorsque le matériau ne contient pas de fer, ou le matériau acidifié lorsque le matériau ne contient pas un fer ni une substance inhibant une activité bactérienne de biolixiviation et/ou une activité d'oxydation de fer, jusqu'à une concentration équivalente à 20 g/l à 200 g/l, préférentiellement de 50 g/l à 150 g/l et, encore plus préférentiellement de 70 g/l à 80 g/l en matériau dans le milieu réactionnel..

Selon un mode de réalisation préférentiel, le procédé est **caractérisé en ce qu'**un rapport entre le volume de la population bactérienne inclue dans une matrice d'inclusion cellulaire et un volume total au sein d'un espace d'acclimatation est compris entre 5 et 74%.

De façon préférentielle, la méthode comprend une étape d'extraction de l'au moins un métal réalisée à partir du troisième milieu réactionnel à la fin de l'étape de biolixiviation.

Cette étape d'extraction consiste, en complément aux étapes de biolixiviation, à récupérer les métaux d'intérêt solubilisés sous forme ionique. Cette étape peut mettre en oeuvre des procédés chimiques, physiques, électrochimiques (hydrométallurgiques, biohydrométallurgiques). La ou les techniques mises en oeuvre consisteront à séparer les métaux d'intérêts du milieu réactionnel de manière sélective lorsque cela s'avère possible, par exemple, par réaction redox, cémentation, adsorption sur charbon actif, précipitation, complexation, électrodéposition, séparation sur résines échangeuses d'ions. A titre d'exemples, une étape de cémentation du Cuivre au Fer métallique (limaille, poudre,..), de cémentation de l'Or au Zinc métallique, de précipitation du Cuivre au Carbonate de Calcium sont envisageables. Une technique bio-hydro-métallurgique peut consister à précipiter les métaux solubilisés par une adaptation du pH et une adjonction de sulfures issus d'un procédé exploitant l'activité sulfato-réductrice de certain micro-organismes.

De façon préférentielle, les populations bactériennes (B1, B2, B3) comprennent des bactéries acidophiles en cultures pures ou en cultures mixtes présentant au moins une caractéristique parmi chacun des groupes suivants sélectionnées parmi les groupes comprenant les bactéries hétérotrophes, mixotrophes, autotrophes, chemoautotrophes ou chemilithoautotrophes oxydant le fer et/ou le soufre et/ou des formes réduites du soufre, psychrophiles, mésophiles, modérément thermophiles, hyperthermophiles, acidophiles, lesdites bactéries ayant un pH de croissance et d'activité se situant entre 0,5 et 3,0, et plus préférentiellement le groupe comprenant les bactéries *Acidiferrobacter thiooxydans, Acidithiobacillus ferrooxidans, Leptospirillum ferroxidans, Leptospirillum ferriphilum, Acidimicrobium ferrooxidans Sulfobacillus thermosulfidooxidans, Acidithiobacillus caldus, Acidianus brierley, sulfobacillus acidophilus, actinobacterium sp., acidocaldus organivorans, alicyclobacillus ferroplasma.*

De façon préférentielle, lors de l'étape de biolixiviation d'au moins un métal, une étape d'acidolyse d'un métal noble présent dans le matériau est présente. De façon alternative, le matériau après l'étape de biolixiviation d'un métal subi une étape de récupération des métaux nobles.

L'étape d'acidolyse est réalisée par la première population bactérienne et la troisième population bactérienne présentes respectivement au sein du premier espace de réaction et du troisième espace de réaction. L'étape de récupération d'un métal noble présent au sein du matériau après l'étape de biolixiviation peut être réalisée par cyanidation ou biocyanidation lorsque le métal noble est l'or, l'argent, le palladium ou le platine.

Selon un mode de réalisation préférentiel, le procédé selon l'invention peut comprendre les étapes suivantes, lesdites étapes étant réalisées après l'étape de biolixiviation d'au moins un métal :
- Précipitation au sein d'un milieu réactionnel de l'ion ferrique en hydroxyde de fer (III),
- Séparation de l'hydroxyde de fer (III) du milieu réactionnel,
- Solubilisation de l'hydroxyde de fer (III),
- Utilisation de l'hydroxyde de fer solubilisé lors d'une étape (du procédé) de biolixiviation d'un métal d'intérêt.

L'étape de précipitation de l'ion ferrique peut être réalisée par l'ajout d'un hydroxyde de sodium concomitant à une hausse de pH afin d'obtenir un pH compris entre 3,50 et 4,05, et préférentiellement un pH égal à 3,75. Cette étape permet de précipiter de façon sélective un hydroxyde de fer (III) sans précipiter l'au moins un métal d'intérêt. L'étape de séparation peut être réalisée par toute méthode de séparation courante pour la séparation d'un fer, telle qu'une décantation, suivie d'une séparation de phases, d'une filtration et/ou d'une centrifugation. La solubilisation de l'hydroxyde de fer (III) peut être réalisée par une acidification dans une solution aqueuse ou dans un milieu de type Lundgren-Silverman de type 9K par l'ajout d'un acide sulfurique, le pH de la solution étant compris entre 0,5 et 3,0, et plus préférentiellement entre 1,5 et 2,0.

### Exemples

Exemple 1 : Récupération de cuivre à partir de poussières de plaquettes de freins.

Les déchets traités sont les poussières de plaquettes de freins, ce matériau pulvérulent est issu de l'industrie automobile et, en particulier, des étapes de polissage, d'alésage et de traitement de finition des pièces en question. La composition des matériaux peut varier en fonction de l'évolution des technologies de freinage automobile et des lots de matériaux considérés. Le résidu valorisé dans le cadre de cet exemple présente la composition élémentaire suivante en % massique: Cu 15%, Fe 10%, Zn 2%, Mg 4.5%, Al 5%, mais aussi Sb 0.4%, As 0.2%, Pb 0.5%, et d'autres éléments en traces ou en quantité insignifiante. Le procédé est applicable à tous types de déchets décrits dans ce brevet.

Les bactéries exploitées dans cet exemple font partie de la classe des bactéries acidophiles oxydant le Fe(II) : *Acidiferrobacter thiooxydans* (DSM 2392), *Acidithiobacillus ferrooxidans* (DSM 11477), *Leptospirillum ferroxidans* (DSM 2391). Ces bactéries acidophiles ont un pH optimal inférieur à 2,0. Le milieu de croissance idéalement utilisé est le milieu 9K : (NH₄)2SO₄ 4g/l, MgSO₄.7H₂O 0,5g/l, K₂HPO₄ 0.5g/l, KCl 0.1 g/l, CaCl₂.2H₂O 0,13g/l, Ca(NO₃)2 0,01g/l, ajusté à pH 1,75 à l'aide d'une solution concentrée de H₂SO₄. Le milieu est complété par une source de Fe(II), à hauteur de 50g/l de FeSO₄.7H₂O. La croissance bactérienne est suivie par numération au microscope à contraste de phase et l'activité microbienne est évaluée à l'aide d'une sonde de potentiel redox, la valeur de ce paramètre croît tout au long de la culture bactérienne (de ±350 mV à ±550 mV). Le volume de cette culture, qui fera l'objet d'une étape d'inclusion dans une masse de matrice colonisée, est de 6,5 litres à une densité cellulaire de 10⁸ cellules/ml. La pré-culture est centrifugée avec une accélération minimale de 12000 g. La suspension concentrée en cellules, ou culot, est ensuite diluée en vue de rinçage et élimination du Fer dans 100ml de milieu 9K sans Fer à pH 1,75; la suspension est à nouveau concentrée par centrifugation à minimum 12000g et est resuspendue dans un volume de 50 ml de milieu 9K sans fer. La matrice d'inclusion est de type semi-synthétique : l'alcool polyvinylique (PVA) (Roth PM : 72000 g/mol, degré d'hydrolyse de 99,9%), et l'alginate de sodium sont utilisés comme composant de la matrice d'inclusion à des concentrations respectives de 9% et 1% finales afin d'encapsuler les bactéries. Le mélange PVA-Alginate est dissout et stérilisé en chauffant pendant 20min à 121 °C. Après refroidissement de la solution d'inclusion, la suspension concentrée en bactéries est mêlée et homogénéisée avec la matrice PVA/Alginate dans un volume final de 1 litre. Le mélange est ensuite extrudé au goutte-à-goutte par gravitation ou sous pression, ce qui entraîne la formation de billes/sphères de 3-4 mm de diamètre au contact de la solution de polymérisation constituée de 50 à 60 g/l de H3BO3 et de 10 à 20 g/l de CaCl2.2H2O dans un volume de 10 litres; la polymérisation des billes est prolongée sous agitation à 50 rpm (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)) pendant 1 h. Par la suite, les billes d'inclusion sont rincées à l'eau distillée, puis incubées dans 1 litre de milieu 9k, à pH 1,75, en présence de 50g/l FeSO₄.7H₂O, sous agitation à 150rpm (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)) et une aération de 1 vvm, l'air étant éventuellement enrichi en CO₂ (de 0,1 à 10%). La diffusion de l'air au sein du réacteur est réalisée par un élément (diffuseur torique, diffuseur fines bulles en céramique ou en élastomères de type EPDM (par exemple),...) assurant un coefficient de transfert volumique d'oxygène (Kₗa) compris entre 0.010 s⁻¹ et 1 s⁻¹, préférentiellement de l'ordre de 0,030 s⁻¹ à 0,050 s⁻¹. Suite à l'oxydation de la totalité du Fer présent dans le milieu (minimum 200h au premier batch), cette étape est réitérée de 2 à 3 fois jusqu'à atteindre une reproductibilité de la durée d'oxydation du Fer(II) lors de chaque batch de propagation (40 à 60h).

Séparation/modification physico-chimique des composants inhibant l'activité biologique de biolixiviation (étape préliminaire au procédé de biolixiviation: étape de pré-conditionnement ç-à-d d'extraction des substances inhibitrices et d'acidification du matériau):
La séparation est opérée par un procédé de mise en suspension des résidus de poussières de freins (RPF) ; cette étape de pré-conditionnement s'effectue dans du milieu 9K en absence de Fer ferreux et de Fer ferrique à pH 1,75 ou en solution aqueuse dont le pH est ajusté à 1,75 par de l'acide sulfurique concentré, sous agitation 100 tr/min (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)).
Le pH est maintenu idéalement à 1,75 ; idéalement par ajout automatisé d'acide sulfurique. La mise en suspension des poussières de frein est réalisée par l'adjonction d'un surfactant comme le Tween 80 (0.1% v/v) afin d'assurer la dispersion et l'homogénéité de la suspension et en raison du caractère hydrophobe de la poussière. Le pré-conditionnement des déchets est réalisé à température ambiante (20°C). La masse de déchet pré-conditionnée représente 10% du volume de solution de pré-conditionnement. Le temps de contact entre la solution acide et les déchets est idéalement d'une heure afin d'éviter la dissolution des métaux d'intérêts par acidolyse en opérant des temps de réaction plus longs. La fraction solide sédimentée est séparée physiquement de la solution de pré-conditionnement et de la phase solide moins dense et flottante ou en suspension qui constituent deux déchets dans le procédé. La fraction lourde est retenue en vue de l'extraction biologique ultérieure des métaux.

Lixiviation du Fer intrinsèque aux déchets (étape 1 : étape de fourniture d'un ion ferreux) :
Cette étape se justifie dans le cas des poussières de freins présentant une teneur intrinsèque en Fer de ±10%, qui pourra faire l'objet d'une mobilisation ou d'une biolixiviation et affranchit ainsi le procédé de l'ajout de Fer sous forme FeSO4. Afin d'acclimater les bactéries à cette étape de lixiviation du Fer intrinsèque aux poussières de frein, le ratio de masse de bille de 20%, soit 200g de billes, non acclimatées / litre de milieu 9K sans Fer est utilisé, à pH 1,75 ; aération 1vvm (l'air étant éventuellement enrichi en CO₂ (de 0,1 à 10%) pour les besoins anaboliques des bactéries) et agitation de 150tr/min (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)). Au sein du bioréacteur de type «stirred tank reactor» ou en réacteur à entrainement gazeux (comme le « air lift reactor »), les billes sont maintenues dans une structure cylindrique synthétique en polypropylène présentant une maille ouverte d'1 mm, permettant les transferts de matière, permettant également de protéger la matrice des effets abrasifs de l'agitation et des déchets en cours de traitement. L'acclimatation débute par l'ajout de 10g/l de poussières de freins pré-conditionnées dans le bioréacteur, permettant l'action indirecte des bactéries sur les déchets et leur acclimatation.
Des techniques de dosage par colorimétrie sont utilisées afin de mesurer la concentration en Fe(II) lixiviée (Orthophénanthroline et hydroxylamine).
Lorsque, dans cet exemple, la totalité du Fer est en solution (par comparaison avec l'analyse élémentaire des déchets et par observation d'une concentration lixiviée maximale et stable), il est important de rompre, par simple retrait, le contact entre les déchets et les bactéries afin d'éviter une lixiviation des métaux non ferreux. Par la suite, l'étape est répétée afin d'augmenter progressivement les concentrations de déchets dans le réacteur: 10g/l, 25g/l, 50g/l jusqu'à 75g/l de déchets. Durant cette étape d'acclimatation, les bactéries encapsulées, n'ont accès à aucune autre source de Fer que celle présente dans les déchets, cela permet une adaptation du métabolisme et du consortium au sein de la matrice.
On considère que l'acclimatation est optimale lorsque la durée nécessaire à la lixiviation de la totalité du Fer intrinsèque aux poussières est constante. Les déchets solides issus de cette étape permettent d'acclimater les populations bactériennes utilisées à l'étape 3, les solutions résiduaires présentant des concentrations croissantes en Fer(II) permettent d'acclimater les populations bactériennes utilisées à l'étape 2. Lorsque les bactéries acidophiles sont acclimatées à 75g/l de poussière de freins, un système semi-continu est mis en route permettant la biolixiviation du Fe(0) intrinsèque. Le réacteur et les paramètres utilisés durant les étapes du procédé de biolixiviation sont identiques à ceux utilisés lors de l'acclimatation. Tout au long du procédé le pH est maintenu à 1,75 ; par ajout automatisé d'acide sulfurique produit ici par une culture connexe d'*Acidithiobacillus thiooxidans* non incluse sur milieu 9K complémenté en Soufre à raison de 10g/l (température : 30°C, aération : 1 vvm). L'action des bactéries inclues acclimatées sur les déchets permet la lixiviation de 100% du Fer restant après pré-conditionnement des poussières de frein en 24h. La solution de Fe(II) sera alors directement mise en contact avec les microorganismes permettant l'oxydation du Fe(II) en Fe(III) (étape 2).

Oxydation du Fe(II) en Fe(III) (étape 2 de l'invention):
De la même manière que dans les étapes précédentes, les microorganismes utilisés dans cette seconde étape possèdent un métabolisme qui devient spécifique au sein d'un consortium adapté naturellement, ici à l'oxydation exclusive du Fe(II) issu de l'étape de lixiviation du Fer (étape 1 de l'invention).
Cette étape d'acclimatation engendre un contact avec tous les éléments issus des poussières de frein traités en étape 1 pouvant ainsi nuire à l'activité, à la viabilité et la croissance des bactéries. Comme dans l'étape précédente, 200g de billes non acclimatées, sous agitation et aération optimales, sont mises en contact avec 1 litre de milieu réactionnel, soit la solution de Fe(II) issu de l'étape 1.
Les bactéries sont mises en contact dans des cultures successives avec les solutions de Fe(II) provenant de 10g/l, 25g/l, 50g/l puis 75g/l de poussières de frein traitées en l'étape 1. Les paramètres sont une aération à 1vvm (l'air étant éventuellement enrichi en CO2 (de 0,1 à 10%), une température de 30°C, une agitation de 150tr/min (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)) et un maintien du pH proche de 1,75 (par ajout automatisé d'acide sulfurique dilué en milieu 9K produit par *Acidithiobacillus thiooxidans*). Des outils de mesure de potentiel redox et de dosage du Fer ferreux/ferrique sont ici aussi utilisés afin de suivre l'oxydation du Fe(II) en Fe(III) par les bactéries.
Après acclimatation des bactéries inclues à cette étape 2, les billes sont mises en contact, en mode semi-continu, avec les solutions de Fe(II) (>10g/l Fe(II)) issues du traitement de 75g/l de poussières de freins. Le réacteur utilisé et les paramètres sont identiques à ceux utilisés lors de l'acclimatation. L'utilisation de techniques de mesure du potentiel redox, de la concentration en Fe(II) permet de déterminer la fin de chaque batch d'oxydation du Fe(II), soit une évolution du potentiel de 350mV à 600mV. Lorsque le potentiel redox est >550 mV, ici en 40 à 60h , la solution de Fe(III) résultant de l'oxydation totale du Fe(II) peut être mise en contact avec les populations bactériennes acclimatées de l'étape 3. Le pH est idéalement maintenu autour de 1,75 afin de minimiser la précipitation du Fe(II) ou Fe(III), sous forme de jarosite par exemple, tout en favorisant la croissance et l'activité des populations bactériennes ; cette valeur de pH peut être adaptée en fonction des micro-organismes, du mode d'encapsulation et des déchets/résidus traités (notamment par des valeurs de pH inférieures au regard des travaux de Jin-yan et al., Study of formation of jarosite mediated by thiobacillus ferrooxidans in 9K medium. Proc. Earth and Planetary Sci. 1(2009)706-712.)

Lixiviation des métaux non ferreux (étape 3 : biolixiviation du métal d'intérêt) :
Suivant le même cheminement que les étapes précédentes d'acclimatation aux poussières de freins, 200g de billes (non acclimatées) par litre de milieu réactionnel, ici une solution de Fe(III) issu de l'étape 2, sont utilisées. Les bactéries inclues sont mises en contact avec les déchets issus de l'étape 1 du procédé, suivant des concentrations croissantes de 10g/l, 25g/l, 50g/l puis 75g/l de déchets traités initial. Les billes sont maintenues dans une structure cylindrique synthétique type polypropylène présentant une maille ouverte d'1 mm. Les paramètres sont idéalement : une oxygénation 1vvm, une température de 30°C, une agitation 150rpm (turbine rushton 6 palles ; rapport entre hauteur de liquide Z(m) et diamètre du réservoir T (m) : Z/T=1 ; diamètre de la turbine D(m)= T/3 ; position turbine par rapport au fond du réservoir : Z/3 (m)) et un maintien du pH proche de 1,75. Le dosage du Cuivre en solution permet de suivre l'évolution de l'acclimatation à la lixiviation des métaux. A chaque nouveau batch de concentration supérieure, 80% minimum du Cuivre initialement contenu dans les résidus doit être lixivié.
Grâce à l'acclimatation, les bactéries inclues sont capables de résister à de fortes concentrations en métaux solubilisés présents dans le milieu réactionnel (métaux lourds), tout au long du procédé de biolixiviation. Elles sont utilisées dans le procédé semi continu, permettant la biolixiviation de la plupart des métaux composants les 75g/l de poussière de frein en un temps minimal de 40 à 60h, avec un rendement de lixiviation de 80% à 100%. Les billes sont également maintenues dans une structure cylindrique synthétique type polypropylène présentant une maille ouverte d'1 mm. Le réacteur utilisé et les paramètres sont identiques à ceux utilisés lors de l'acclimatation : une oxygénation d'1vvm, une température de 30°C, une agitation 150rpm (mêmes conditions que précédemment) et un maintien du pH proche de 1,75. A chaque fin de batch, le potentiel redox est > à 550 mV et le Fer est exclusivement sous forme Fe(III), le batch suivant peut être entamé par répétition cyclique des opérations. Le procédé exposé dans cet exemple peut être appliqué à plus grande échelle en respectant l'ensemble des paramètres de travail et en assurant le scaling-up des bioréacteurs, notamment en transposant le coefficient volumique de transfert d'oxygène (Kla)

Exemple 2 : Récupération de métaux non-ferreux, et de métaux nobles d'intérêt, par biolixiviation de broyats de téléphones mobiles.

Ce second exemple consiste en l'utilisation de bactéries acidophiles inclues afin de lixivier les métaux lourds comme le Cuivre combinés dans la structure du déchet aux métaux nobles comme l'or. Ceci permet la biolixiviation du Cuivre mais également d'une fraction de l'Or par acidolyse. Cet exemple est illustré par le traitement d'un matériau issu du broyage des téléphones mobiles (broyage de téléphones mobiles entiers, de marques et modèles aléatoires à une granulométrie moyenne de 1mm), avec une concentration initiale en Au de 221 mg/kg et en Cu de 69 g/Kg. Pour ce type de déchet, il n'est pas nécessaire de réaliser une séparation ou un pré-conditionnement; cependant une acidification des déchets est réalisée. L'ajout de Fer sous forme de FeS0₄.7H₂O est indispensable étant donné l'absence de Fer intrinsèque aux déchets. Le procédé va donc se dérouler en deux étapes : oxydation des ions ferreux (Fe(II)) (étape 2 de l'invention) puis biolixiviation des métaux lourds et d'une fraction des métaux précieux (étape 3 de l'invention). Le pH est maintenu proche de 1,75 par ajout d'acide sulfurique et régulation automatisée tout au long du procédé, afin d'éviter les fuites de Fer par formation de précipité de jarosite.

Les déchets (ici 100g) sont acidifiés dans 1 litre de milieu 9K à ph 1,75, par ajout d'H2SO4 jusqu'à obtention d'un pH stable à cette valeur. Les déchets (100 g/l) sont ensuite récupérés par filtration (filtre Macherey Nagel 616 1/4) ou décantation (cône d'Imhoff) et séparation de phases. Le protocole d'inclusion cellulaire est le même que celui utilisé lors de la biolixiviation des métaux d'intérêt présents dans les poussières de frein dans l'exemple 1 : 6,5 litres de pré-culture sont centrifugées à une accélération de plus de 12000 g, le culot récupéré est rincé (au minimum 2 fois) dans 100ml de milieu 9K sans fer, ph 1,75. Le culot est ensuite homogénéisé avec les éléments dissouts de la matrice d'inclusion (PVA 9%/Alginate de sodium 1% en concentration finale stérilisés 20min à 120°C), par agitation, le mélange est ensuite extrudé par gravitation au goutte-à-goutte ou sous forme de filet interrompu formant ainsi des billes/sphères permettant l'encapsulation bactérienne, dans une solution de polymérisation composée de 50 g/l H3BO3 et CaCl2.2H2O 20 g/l sous agitation pendant 1 h. Par la suite les billes sont mises à raison de 200 g de billes par litre dans du milieu 9K avec 50g/l de FeSO4.7H20, ph 1,75, 30°C sous agitation afin de permettre la propagation des bactéries dans la matrice. Le suivi du potentiel redox (de 350mV à >550mV) permet de déterminer l'état d'oxydation du Fer (10g/l) en solution. Après avoir réalisé la phase de propagation (4 batch successifs d'oxydation du Fer par les bactéries inoculées dans la matrice), soit obtenu une durée d'oxydation du Fer constante de batch en batch de 50h, les 200g de billes (pour 1 litre de milieu 9K, 50g/FeSO₄.7H₂O, ph 1,75, potentiel redox 350mV) vont être exclusivement utilisées pour l'oxydation du Fer (étape 2 de l'invention). Les billes sont maintenues immergées dans le milieu grâce à une structure synthétique et les paramètres sont idéalement : une oxygénation 1vvm, une température de 30°C, une agitation 150rpm (mêmes conditions que précédemment). Un dosage par colorimétrie à l'Orthophénanthroline et hydroxylamine, et un suivi du potentiel redox (de >550mV) permettent de déterminer le temps à partir duquel l'oxydation du Fe(II) en Fe(III) est totale, soit dans cet exemple, 100% du Fe(II) oxydé en Fe(III) en 50h. Idéalement le pH est maintenu à 1,75 par ajout d'acide sulfurique d'origine biologique ou chimique. La solution de Fe(III) permettra d'initier la biolixiviation des métaux d'intérêt dans l'étape suivante.

Lors de la seconde partie de ce procédé (étape 3 de l'invention), 200g de billes de PVA/alginate colonisées (pour 1 litre de milieu réactionnel) ayant également suivi la phase de propagation vont être acclimatées pour la biolixiviation des métaux lourds (Cuivre), les billes sont maintenues immergées dans une structure cylindrique synthétique type polypropylène présentant une maille ouverte d'1 mm. Les paramètres idéaux sont : une oxygénation 1vvm, une température de 30°C, une agitation 150rpm (mêmes conditions que précédemment) et un maintien du pH proche de 1,75. La solution de Fe(III) issue du réacteur précédent est utilisée ici comme milieu réactionnel (10g/l Fe(III)). Pour l'acclimatation, les billes sont mises en contact avec une première concentration de déchets acidifiés, 10g/l, provoquant ainsi une chute du potentiel redox de la solution réactionnelle par réduction du Fe(III) en Fe(II) par réactions avec les métaux contenus dans les broyats de téléphones (de 600mV à 350mV). Le suivi du potentiel redox permet de déterminer l'évolution de la lixiviation des métaux ; lorsque le potentiel est remonté à 550mV, la réaction est terminée, les métaux sont lixiviés. Les déchets solides et la solution de biolixiviation sont séparés par décantation (cône d'Imhoff) et séparation de phases ou par filtration, puis l'étape d'oxydation est réitérée avec 1 litre de nouveau milieu 9K complémenté de 50g/l de FeSO₄.7H₂O (ph 1,75). Ensuite, l'étape 3 de l'invention est réalisée avec un ajout de déchets (20g/l, 30g/l, 40g/l...) dans la solution de Fe(III) issue du réacteur précédent, jusqu'à la concentration de travail en matériau, soit 65g/l de déchets de broyat de téléphones mobiles traités.

Une fois les billes acclimatées, un pilote semi continu va permettre de traiter 65g/l de déchets de téléphones en un temps de l'ordre de 48h. Les résultats de quantification de métaux solubilisés par ce procédé (ICP, dosage colorimétrique...), montrent que minimum 50% du cuivre présent dans les déchets est lixivié, mais également 27% de l'or. Afin d'améliorer le rendement du procédé, après l'étape 3, une étape de précipitation du Fer (Fe(III)) par ajout de NaOH 1 M sous forme Fe(OH)3 jusqu'à l'augmentation du pH à la valeur de 3,75 est effectuée. A ce pH, une quantité >95% du Fer présent dans le milieu est précipitée entrainant moins de 10% de précipitation des métaux biolixiviés autres que le Fer (Cu, Zn, Ni,...).

Les valeurs de potentiels redox ou potentiels d'oxydo-réduction exposés dans la description de cette invention sont exprimés par rapport à une électrode de référence Ag/AgCl. Les valeurs absolues et conventionnelles par rapport à l'électrode normale à Hydrogène (E°) s'obtiennent par addition aux valeurs mentionnées du potentiel de l'électrode de référence par rapport à l'ENH corrigé par rapport à la température de travail, soit 192 mV à 30°C dans le cas d'une électrode Ag/AgCl/KClsat+AgClsat.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus.
L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « l' », pour introduire un élément n'exclut pas la présence d'une pluralité de ces éléments.

L'invention peut également être décrite comme suit :
Un procédé de récupération d'au moins un métal présent au sein d'un matériau, ledit matériau pouvant comprendre du fer, le procédé comprenant une étape de fourniture d'un ion ferreux, une étape de fourniture d'un ion ferrique et une étape de biolixiviation d'au moins un métal présent dans le matériau par les ions ferriques, chacune des étapes étant mise en oeuvre par une population bactérienne particulière.

## Revendications

1. Procédé de biolixiviation indirecte pour extraire au moins un métal autre que le fer présent dans un matériau, ledit procédé comprenant les étapes de :
a) fourniture d'un ion ferreux dans un premier espace de réaction,
b) oxydation de l'ion ferreux fourni en ion ferrique dans un second espace de réaction,
c) biolixiviation dudit au moins un métal par ledit ion ferrique dans un troisième espace de réaction,
**caractérisé en ce que** l'étape de fourniture d'un ion ferreux est réalisée,
i) soit par une biolixiviation d'un fer présent au sein du matériau par une première population bactérienne (B1) oxydant le fer et inclue dans une première matrice d'inclusion et immergée dans un premier milieu réactionnel présent au sein du premier espace de réaction,
ii) soit par une lixiviation acide d'un fer présent au sein du matériau par un ajout d'un acide fort, préférentiellement l'acide sulfurique, dans le premier espace de réaction,
iii) soit par l'ajout d'ions ferreux,
de façon à obtenir une concentration en ions ferreux comprise entre 2 g/l et 50 g/l dans le premier milieu réactionnel,
**et en ce que** les étapes d'oxydation de l'ion ferreux et de biolixiviation dudit au moins un métal sont chacune réalisées dans un espace de réaction comprenant un milieu réactionnel et une population bactérienne (B2, B3) comprenant au moins une population de bactéries acidophiles oxydant le fer, chacune des populations bactériennes (B2, B3) étant inclue dans une matrice d'inclusion cellulaire immergée dans chacun des milieux réactionnels de chaque espace de réaction, les milieux réactionnels, les populations bactériennes et les matériaux présents dans les différents espaces de réaction pouvant être transférés entre ces différentes espaces de réaction,
**et en ce qu**'une oxydation itérative d'un ion ferreux, résultant de la biolixiviation dudit au moins un métal, en un ion ferrique est réalisée par la population bactérienne (B3) présente dans le troisième espace de réaction,
**et en ce que** les espaces de réaction sont différents et les populations bactériennes (B1, B2, B3) ne sont pas identiques.

2. Procédé selon la revendication 1 **caractérisé en ce que** ladite étape de biolixiviation dudit au moins un métal est réitérée lorsque la quantité dudit au moins un métal dans le matériau après une étape de biolixiviation est supérieur à 20% de la quantité initiale dudit au moins un métal au sein du matériau, et plus préférentiellement supérieur à 50%.

3. Procédé selon l'une quelconque des revendications 1 ou 2, **caractérisé en ce que** le procédé comprend également au moins une des étapes suivante :
- extraction d'au moins une substance présente dans ledit matériau et inhibant une activité bactérienne de biolixiviation et/ou une activité bactérienne d'oxydation du fer, ladite étape étant réalisée avant l'étape de fourniture d'un ion ferreux,
- Acidification du matériau par la fourniture d'une solution acide de façon à ce que le matériau soit dans une solution dont le pH est stabilisé entre 0,5 et 3,0.

4. Procédé selon l'une quelconque des revendications précédentes, **caractérisé en ce qu'**une étape d'inclusion dans une matrice d'inclusion cellulaire d'une population bactérienne est présente et **en ce que** l'étape d'inclusion comprend les étapes de :
- Fourniture d'un milieu d'inclusion liquide,
- Fourniture d'un composé matriciel d'inclusion cellulaire dans le milieu d'inclusion selon un rapport de poids à volume entre le composé matriciel d'inclusion et le milieu d'inclusion compris entre 5 et 400 g/l.,
- Fourniture d'un inoculum de la population bactérienne dans le milieu d'inclusion,
- Formation d'une matrice d'inclusion cellulaire comprenant la population bactérienne.

5. Procédé selon la revendication 4, **caractérisé en ce que** le composé matriciel d'inclusion cellulaire est sélectionné parmi le groupe des polymères naturels ou synthétiques hydrosolubles pouvant former des hydrogels par gélification ionotropique, photochimique, thermique ou par réticulation ou polymérisation, ledit groupe comprenant l'alginate, l'agar, la gerlite (heteropolysaccharide anionique), le chitosan, la kappa-carraghénane, le poly-acrylamide, le polyacrylamide-hydrazide, le co-poly(N-isopropylacrylamide/acrylamide), le polyéthylène glycol, les méthacrylates à base de monomères de méthylacrylamide, d'hydroxyéthylméthacrylate ou de méthylméthacrylate, les résines epoxy les résines photo-réticulables, l'ester de diéthylène glycol, la polyvynilpyrrolidone, le silicone, l'alcool polyvinylique, les monométhacrylates ou diméthacrylates ou diacrylates de polyéthylène glycol, l'hydrogel de polyuréthane, l'hydroxyethyl methacrylate, des résines photo-réticulables ou un mélange de plusieurs de ces composés.

6. Procédé selon l'une quelconque des revendications 4 ou 5, **caractérisé en ce que** une étape de propagation bactérienne est réalisée après l'étape d'inclusion d'une population bactérienne dans une matrice d'inclusion cellulaire, ladite étape de propagation comprenant les étapes de :
- fourniture d'un milieu de culture permettant à la population bactérienne de se multiplier, le dit milieu de culture comprenant la population bactérienne inclue dans une matrice d'inclusion cellulaire selon un rapport de volume de matrice d'inclusion et de bactéries inclues dans celle-ci sur le volume total compris entre 5 et 74%,
- ajout d'ions ferreux à une concentration initiale comprise entre 2 et 50 g/l,
- remplacements du milieu de culture par un milieu de culture frais lorsque l'oxydation du fer ferreux en fer ferrique est totale, et ajouts d'ions ferreux de façon à obtenir la concentration initiale en ions ferreux,
- arrêt de l'étape de propagation lorsque le temps nécessaire pour oxyder la totalité du fer ferreux en fer ferrique au sein du milieu de culture ne diminue plus.

7. Procédé selon l'une quelconque des revendications précédentes, **caractérisé en ce que** le premier espace de réaction comprend une première population bactérienne (B1) inclue dans une première matrice d'inclusion cellulaire, ladite première population bactérienne ayant, préalablement à son utilisation dans l'étape a) du procédé et lorsque le fer est présent au sein du matériau, subi une acclimatation par la culture de ladite première population bactérienne dans un milieu d'acclimatation, ledit milieu d'acclimatation comprenant le matériau, ledit milieu d'acclimatation étant remplacé par un milieu d'acclimatation frais lorsque le potentiel redox du milieu d'acclimatation atteint une valeur supérieure de 80 mV à la valeur du potentiel redox initiale du milieu d'acclimatation, ledit milieu d'acclimatation frais étant complété à chaque remplacement par une concentration croissante en matériau, ladite concentration croissante évoluant par pas de 2 g/l à 20 g/l en matériau, jusqu'à ce que la concentration du matériau dans le milieu soit comprise entre 2 g/l et 200 g/l, plus préférentiellement entre 50 g/l et 150 g/l, et encore plus préférentiellement la concentration est égale à 70 g/l et 80 g/l.

8. Procédé selon la revendication 7, **caractérisé en ce que** le second espace de réaction comprend une seconde population bactérienne (B2) inclue dans une seconde matrice d'inclusion cellulaire, ladite seconde population bactérienne ayant, préalablement à son utilisation dans l'étape b) du procédé et lorsqu'un fer est présent au sein du matériau, subi une acclimatation par la culture de ladite seconde population bactérienne inclue dans une matrice d'inclusion cellulaire dans un second milieu d'acclimatation, ledit second milieu d'acclimatation consistant, aux différents milieux d'acclimatation successifs issus de l'étape d'acclimatation du premier système bactérien desquels a été retiré le matériau, la concentration en fer ferreux étant maintenue à une concentration comprise entre 2 g/l et 50 g/l dans ledit milieu d'acclimatation, ledit milieu d'acclimatation étant éventuellement complété par l'ajout de fer ferreux.

9. Procédé selon la revendication 8, **caractérisé en ce que** le troisième espace de réaction comprend une troisième population bactérienne (B3) inclue dans une troisième matrice d'inclusion cellulaire, ladite troisième population bactérienne ayant, préalablement à son utilisation dans l'étape c) du procédé, subi une acclimatation par la culture de ladite troisième population bactérienne inclue dans une troisième matrice d'inclusion cellulaire dans un troisième milieu d'acclimatation, ledit troisième milieu d'acclimatation consistant aux différents milieux successifs issus de l'étape d'acclimatation du deuxième système bactérien et complété avec une concentration croissante par pas de 2 g/l à 20 g/l en matériau traité, ledit matériau traité consistant au premier matériau après acclimatation de la première population bactérienne lorsque le matériau contient du fer, ou le matériau issu de l'étape d'extraction de substances inhibant une activité bactérienne de biolixiviation et/ou une activité d'oxydation de fer, lorsque le matériau ne contient pas de fer, ou le matériau acidifié lorsque le matériau ne contient pas un fer ni une substance inhibant une activité bactérienne de biolixiviation et/ou une activité d'oxydation de fer, jusqu'à une concentration équivalente à 20 g/l à 200 g/l, préférentiellement de 50 g/l à 150 g/l et, encore plus préférentiellement de 70 g/l à 80 g/l en matériau dans le milieu réactionnel.

10. Procédé selon l'une quelconque des revendications précédentes, **caractérisé en ce que** l'étape a) de fourniture d'ions ferreux est réalisée avec un rapport de volume entre la première population bactérienne (B1) inclue dans une première matrice d'inclusion cellulaire et le volume du premier espace de réaction compris entre 5% et 74%, lorsque un fer est présent dans le matériau, **en ce que** le pH dudit premier milieu réactionnel est compris entre 0,5 et 3,0, et **en ce que** la concentration en matériau au sein du premier espace réactionnel est comprise lorsque ledit matériau contient un fer, entre 20 g/l et 200g/l, préférentiellement entre 50 g/l et 150 g/l et, encore plus préférentiellement entre 70 g/l et 80 g/l en matériau dans le milieu réactionnel.

11. Procédé selon l'une quelconque des revendications précédentes, **caractérisé en ce que** l'étape b) d'oxydation des ions ferreux en ions ferriques est réalisée avec un rapport de volume entre la seconde population bactérienne (B2) inclue dans une seconde matrice d'inclusion cellulaire et le volume du second espace de réaction compris entre 5% et 74%, ledit second milieu réactionnel consistant en le premier milieu réactionnel après l'étape a) de fourniture d'un ion ferreux et **en ce que** la concentration en ions ferreux est ajustée entre 2 g/l et 50 g/l, et **en ce que** le pH du milieu réactionnel est inférieur à 3.0.

12. Procédé selon l'une quelconque des revendications précédentes, **caractérisé en ce que** l'étape c) de biolixiviation dudit au moins un métal est réalisée avec un rapport de volume entre la troisième population bactérienne (B3) inclue dans une troisième matrice d'inclusion cellulaire et le volume du troisième espace de réaction compris entre 5 et 74%, ledit troisième milieu réactionnel consistant au second milieu réactionnel après l'étape b) d'oxydation du fer ferreux en fer ferrique, un pH du milieu réactionnel étant compris entre 0,5 et 3,0 et **en ce que** la concentration en matériau est comprise entre 20 et 200g/l, préférentiellement entre 50 et 150 g/l et, encore plus préférentiellement entre 70 g/l et 80 g/l en matériau dans le milieu réactionnel, ledit matériau consistant au matériau après lixiviation du fer par la première population bactérienne (B1) lorsque le matériau contient du fer, et/ou du matériau issu de l'étape d'acidification et/ou d'extraction de substances inhibant une activité bactérienne de biolixiviation et/ou une activité d'oxydation de fer.

13. Procédé selon l'une quelconque des revendications précédentes, **caractérisé en ce que** les populations bactériennes (B1, B2, B3) comprennent des bactéries acidophiles en cultures pures ou en cultures mixtes présentant au moins une caractéristique parmi chacun des groupes suivants sélectionnées parmi les groupes comprenant les bactéries hétérotrophes, mixotrophes, autotrophes, chemoautotrophes ou chemilithoautotrophes oxydant le fer et/ou le soufre et/ou des formes réduites du soufre, psychrophiles, mésophiles, modérément thermophiles, hyperthermophiles, acidophiles, lesdites bactéries ayant un pH de croissance et d'activité se situant entre 0,5 et 3,0, et plus préférentiellement le groupe comprenant les bactéries *Acidiferrobacter thiooxydans, Acidithiobacillus ferrooxidans, Leptospirillum ferroxidans, Leptospirillum ferriphilum, Acidimicrobium ferrooxidans Sulfobacillus thermosulfidooxidans, Acidithiobacillus caldus, Acidianus brierley, sulfobacillus acidophilus, actinobacterium sp., acidocaldus organivorans, alicyclobacillus ferroplasma.*

14. Procédé selon l'une quelconque des revendications précédentes, **caractérisé en ce que** le matériau est sélectionné parmi le groupe des déchets, sous-produits ou résidus industriels comprenant des métaux non-ferreux et/ou des métaux nobles, ledit matériau étant composé d'au moins un métal en combinaison éventuelle avec du fer, ledit métal étant sélectionné dans le groupe comprenant du cuivre, du zinc, du nickel, de l'étain, de l'aluminium, de l'or, de l'argent, du platine, du rhodium, du ruthénium, de l'iridium, de l'osmium, du palladium, du titane, du cobalt, du vanadium, du molybdène, du tungstène, du béryllium, du bismuth, du cérium, du cadmium, du niobium, du technétium, de l'indium, du gallium, du germanium, du lithium, du sélénium, du tantale, du tellurium, de l'arsenic, de l'antimoine, du bismuth, du plomb, du mercure, ou une combinaison de ces métaux.

15. Procédé selon l'une quelconque des revendications précédentes **caractérisé en ce que** le matériau est sous forme de poudre et présente une taille de particules inférieure à 1 mm, préférentiellement inférieure à 0,5 mm.
